(19) Europäisches Patentamt
European Patent Office
Office européen des brevets

(11) EP 4 502 677 A1

(12) **EUROPEAN PATENT APPLICATION**
published in accordance with Art. 153(4) EPC

(43) Date of publication:
**05.02.2025 Bulletin 2025/06**

(21) Application number: **23779978.8**

(22) Date of filing: **22.03.2023**

(51) International Patent Classification (IPC):
***G02B 5/30** (2006.01)* ***B32B 7/023** (2019.01)*
***B42D 25/22** (2014.01)* ***B42D 25/364** (2014.01)*

(52) Cooperative Patent Classification (CPC):
**B32B 7/023; B42D 25/22; B42D 25/364; G02B 5/30**

(86) International application number:
**PCT/JP2023/011303**

(87) International publication number:
**WO 2023/189966 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022057254**

(71) Applicant: **Zeon Corporation**
**Tokyo 100-8246 (JP)**

(72) Inventor: **FUJINO, Yasuhide**
**Tokyo 100-8246 (JP)**

(74) Representative: **Maiwald GmbH**
**Elisenhof**
**Elisenstraße 3**
**80335 München (DE)**

(54) **IDENTIFICATION MEDIUM AND ARTICLE**

(57) An identification medium including: a first layer; a second layer disposed thereon in a manner of overlapping with the first layer; and a tackiness layer disposed on the second layer, wherein: the first layer is a layer capable of reflecting one of clockwise circularly polarized light and counterclockwise circularly polarized light and of allowing transmission of the other circularly polarized light, and includes a layer of a resin having cholesteric regularity; the second layer is a layer capable of reflecting at least a portion of circularly polarized light rotating in a same direction as a rotation direction of the circularly polarized light that is reflected by the first layer and allowing transmission of the circularly polarized light rotating in a direction opposite to the rotation direction of the circularly polarized light that is reflected by the first layer, and is a layer containing flakes of a resin having cholesteric regularity; and an adhesion force F1 between the first layer and the second layer, an adhesion force F2 between the second layer and the tackiness layer satisfy F1<F2, and the adhesion force F1 and an adhesion force F3 between the tackiness layer and the adherend satisfy F1<F3.

FIG.2

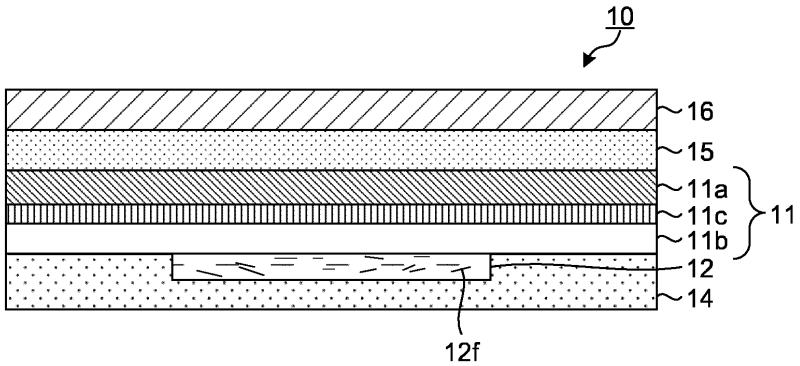




Processed by Luminess, 75001 PARIS (FR)

## Description

### Field

The present invention relates to an identification medium and an article.

### Background

It is a general practice to furnish an article with an identification medium which cannot be easily reproduced for determination whether or not the article is an authentic product supplied from a registered manufacturer. As such an identification medium, those formed from a material having a circularly polarized light separation function have been known.

A material having a circularly polarized light separation function has a function of transmitting either clockwise circularly polarized light or counterclockwise circularly polarized light, and of reflecting a portion of or all of the other circularly polarized light. An image appearing when the identification medium formed using this material is observed through a clockwise circular polarizing plate differs from an image appearing when the identification medium is observed through a counterclockwise circular polarizing plate. Therefore, in the determination of authenticity of an article including such an identification medium, a viewer equipped with two circular polarizing plates: a clockwise circular polarizing plate and a counterclockwise circular polarizing plate is generally used.

The determination of authenticity using a priorart identification medium requires a viewer equipped with two circularly polarizing plates as described above, and therefore requires a high cost. Furthermore, since it is difficult for general users to acquire the viewer, it is difficult for the general users to perform a determination of authenticity, and the determination of authenticity is performed only by an original manufacturer, a certain retail store, a public institution, or the like. Accordingly, there has been a need for an identification medium with which general users can determine authenticity without using such a special viewer.

In response to the need, the present inventor has developed an identification medium that includes: a first layer that is capable of reflecting one type of circularly polarized light and of allowing transmission of the other type of circularly polarized light; and a second layer that is capable of reflecting circularly polarized light rotating in the same direction as the rotation direction of the circularly polarized light that is reflected by the first layer, and of allowing transmission of the circularly polarized light rotating in the direction opposite to the rotation direction of the circularly polarized light that is reflected by the first layer, and that is disposed in a manner of overlapping with the first layer. Here, the identification medium allows for determination of authenticity with the naked eye when the reflectance of the first layer and the reflectance of the second layer satisfy a specific relationship (Patent Literature 1).

Patent Literature 2 describes an identification medium that serves to identify authenticity having a reuse prevention function, although the invention is not an invention pertaining to the identification medium including the first layer and the second layer.

### Citation List

#### Patent Literature

Patent Literature 1: International Publication No. 2020/004155 (corresponding publication: U.S. patent application publication No. 2021/300105)
Patent Literature 2: Japanese Patent No. 6180095 B (corresponding publication: U.S. patent application publication No. 2015/323898)

### Summary

#### Technical Problem

Although the identification medium including the first layer and the second layer is semitransparent, and the other surface side is seen through one surface side of the identification medium, the identification medium allows for visual recognition in which the second layer is observed only during observation of the identification medium from the second layer side, and the second layer is not observed during observation of the identification medium from a side opposite to the second layer side (the first layer side). Therefore, the identification medium is expected to be used, for example, as an identification medium to be bonded to an adherend having transparency, such as glass. For the identification medium used

by bonding to the adherend, a function of preventing the identification medium that has been bonded to the adherend from being reused after peeling is strongly required.

The present invention has been made in view of the above-mentioned problems, and an object of the present invention is to provide an identification medium that allows for determination of authenticity without using a special viewer and that is prevented from being reused, and an article including the same.

Solution to Problem

The present inventor has intensively studied regarding the problems, and found that reuse can be prevented by making the identification medium lose its optical function, by configuring an identification medium such that, when bonding the identification medium to an adherend, a tackiness layer, a second layer, and a first layer are layered in this order, wherein an adhesion force F1 between the first layer and the second layer is made smaller than an adhesion force F2 between the second layer and the tackiness layer and smaller than an adhesion force F3 between the tackiness layer and the adherend, and thereby, during peeling of the identification medium from the adherend, the identification medium allows for separation of the first layer from the second layer. Thus, the present invention has been completed. The present invention includes the following.

<1> An identification medium comprising: a first layer; a second layer disposed thereon in a manner of overlapping with the first layer; and a tackiness layer disposed on the second layer, wherein:

the first layer is a layer capable of reflecting one of clockwise circularly polarized light and counterclockwise circularly polarized light and of allowing transmission of the other circularly polarized light, and includes a layer of a resin having cholesteric regularity;
the second layer is a layer capable of reflecting at least a portion of circularly polarized light rotating in a same direction as a rotation direction of the circularly polarized light that is reflected by the first layer and allowing transmission of the circularly polarized light rotating in a direction opposite to the rotation direction of the circularly polarized light that is reflected by the first layer, and is a layer containing flakes of a resin having cholesteric regularity; and
when the tackiness layer is bonded to an adherend, an adhesion force F1 between the first layer and the second layer, an adhesion force F2 between the second layer and the tackiness layer, and an adhesion force F3 between the tackiness layer and the adherend satisfy relationships of the following formulae (1) and (2):

$$F1 < F2 \quad (1),$$

and

$$F1 < F3 \quad (2).$$

<2> The identification medium according to <1>, wherein a tension T1 that deforms the tackiness layer and the adhesion force F3 between the tackiness layer and the adherend satisfy a relationship of the following formula (3) :

$$T1 < F3 \quad (3).$$

<3> The identification medium according to <1> or <2>, wherein:

the second layer is a layer disposed on a part of a surface of the first layer;
the tackiness layer is a layer disposed on the first layer and on the second layer; and
when the tackiness layer is bonded to an adherend, the adhesion force F3 between the tackiness layer and the adherend and an adhesion force F4 between the first layer and the tackiness layer satisfy a relationship of the following formula (4):

$$F4 < F3 \quad (4).$$

<4> The identification medium according to any one of <1> to <3>, comprising a third layer disposed on a surface of the

first layer opposite to a surface on which the second layer is disposed in a manner of overlapping with the first layer, wherein

the third layer is a layer capable of allowing transmission of circularly polarized light rotating in a direction opposite to the rotation direction of the circularly polarized light that is reflected by the first layer, and is a layer containing flakes of a resin having cholesteric regularity.

<5> The identification medium according to any one of <1> to <4>, wherein a volume-average particle diameter (D50) of the flakes of the resin having cholesteric regularity is 70 μm or more.

<6> The identification medium according to any one of <1> to <5>, wherein the first layer is a layered body of the layer of the resin having cholesteric regularity and a layer containing a norbornene-based resin.

<7> The identification medium according to any one of <1> to <6>, wherein the adherend is transparent glass.

<8> The identification medium according to any one of <1> to <7>, wherein the identification medium is separable between the first layer and a layered portion of the second layer and the tackiness layer when the identification medium is bonded to the adherend and then peeled therefrom.

<9> The identification medium according to <8>, wherein the tackiness layer is deformed and the second layer is broken when the tackiness layer in the layered portion having been separated from the identification medium is peeled from the adherend.

<10> An article comprising: the identification medium according to any one of <1> to <9>; and an adherend to which the identification medium is bonded.

## Advantageous Effects of Invention

The present invention can provide an identification medium that allows for determination of authenticity without using a special viewer equipped with a clockwise circularly polarizing plate and a counterclockwise circularly polarizing plate, and is prevented from being reused, and an article including the same.

## Brief Description of Drawings

FIG. 1 is a plan view schematically illustrating an identification medium according to Embodiment 1 of the present invention.

FIG. 2 is a cross-sectional view schematically illustrating a cross section in an X1-X1 direction of FIG. 1.

FIG. 3 is an exploded cross-sectional view schematically illustrating adhesion forces between respective layers of the identification medium illustrated in FIG. 2.

FIG. 4 is an exploded cross-sectional view schematically illustrating a path of light when light enters from a second layer side of the identification medium.

FIG. 5 is an exploded cross-sectional view schematically illustrating a path of light when light enters from a first layer side of the identification medium.

FIG. 6 is a perspective view schematically illustrating a flake and a path of light that enters the flake.

FIG. 7 is an exploded perspective view schematically illustrating an identification medium according to Embodiment 2 of the present invention.

FIG. 8 is a schematic plan view of the identification medium of FIG. 7 seen from a second layer side.

FIG. 9 is a schematic plan view of the identification medium of FIG. 7 seen from a third layer side.

FIG. 10 is a cross-sectional view schematically illustrating a cross section in an X2-X2 direction of FIGs. 8 and 9.

FIG. 11 is an exploded cross-sectional view schematically illustrating a path of light when light enters from the second layer side of the identification medium.

FIG. 12 is an exploded cross-sectional view schematically illustrating a path of light when light enters from the third layer side of the identification medium.

FIG. 13 is a cross-sectional view schematically illustrating a method for measuring an adhesion force F1 between the first layer and the second layer in Examples.

FIG. 14 is a cross-sectional view schematically illustrating a method for measuring an adhesion force F2 between the second layer and a tackiness layer in Examples.

FIG. 15 is a cross-sectional view schematically illustrating a method for measuring an adhesion force F3 between the tackiness layer and an adherend in Examples.

FIG. 16 is a cross-sectional view schematically illustrating a method for measuring an adhesion force F4 between the first layer and the tackiness layer in Examples.

FIG. 17 is a cross-sectional view schematically illustrating a method for measuring a tension T1 that deforms the tackiness layer in Examples.

FIG. 18 is a side view schematically illustrating an apparatus for producing a peel piece used during the production of a peel piece (flake) of a cholesteric resin layer in Examples.

Description of Embodiments

Hereinafter, the present invention will be described in detail with reference to embodiments and examples. However, the present invention is not limited to the embodiments and examples described hereinafter, and may be freely modified for implementation without departing from the scope of claims of the present invention and the scope of their equivalents.

In the following description, a term "pattern" refers to a planar shape of an object, unless otherwise specified. Examples of the pattern may include a letter, a numeral, and a figure.

In the following description, a term "visible light region" refers to a wavelength range of 400 nm or more and 780 nm or less.

In the following description, an in-plane retardation of a film or a layer is a value represented by (nx - ny) × d. Furthermore, a retardation of a film or a layer in a thickness direction thereof is a value represented by {(nx + ny)/2 - nz} × d. Herein, nx represents a refractive index in a direction in which the maximum refractive index is given among directions perpendicular to the thickness direction of the film or layer (in-plane directions), ny represents a refractive index in a direction, among the above-mentioned in-plane directions of the film or layer, perpendicular to the direction giving nx, nz represents a refractive index in the thickness direction of the film or layer, and d represents the thickness of the film or layer. These retardations may be measured with a commercially available phase difference measuring device (for example, "WPA-micro" manufactured by Photonic Lattice, Inc.) or the Senarmont method at a wavelength of 560 nm.

In the following description, the term "(meth)acryl" is a term that encompasses acryl, methacryl, and a combination of these. The term "(meth)acrylate" is a term that encompasses acrylate, methacrylate, and a combination of these. The term "(thio)epoxy" is a term that encompasses epoxy, thioepoxy, and a combination of these. The term "iso(thio)cyanate" is a term that encompasses isocyanate, isothiocyanate, and a combination of these.

In the following description, an adhesive and a tackiness agent are discriminated on the basis of a shear storage elastic modulus unless otherwise specified. Specifically, the adhesive refers to a material having a shear storage elastic modulus at 23°C of 1 MPa to 500 MPa after irradiation with an energy beam or after heating treatment unless otherwise specified. The tackiness agent refers to a material having a shear storage elastic modulus at 23°C of less than 1 MPa unless otherwise specified.

[Identification medium]

[1. Embodiment 1]

Hereinafter, an identification medium according to Embodiment 1 of the present invention will be described with reference to FIGs. 1 to 5.

FIG. 1 is a plan view schematically illustrating the identification medium according to Embodiment 1 of the present invention. FIG. 2 is a cross-sectional view schematically illustrating a cross section in an X1-X1 direction of FIG. 1. FIG. 3 is an exploded cross-sectional view schematically illustrating adhesion forces between respective layers of the identification medium shown in FIG. 2. FIG. 4 is an exploded cross-sectional view schematically illustrating a path of light when light enters from a second layer side of the identification medium. FIG. 5 is an exploded cross-sectional view schematically illustrating a path of light when light enters from a first layer side of the identification medium.

As shown in FIGs. 1 to 3, an identification medium 10 according to an embodiment of the present invention includes a first layer 11, a second layer 12 disposed thereon in a manner of overlapping with the first layer 11, and a tackiness layer 14 disposed on the second layer 12. In this application, a certain layer "overlapping" with another layer means that the layers are at least partially at the same planar position when the planar positional relationship of the layers is observed in the thickness direction of the identification medium.

The tackiness layer 14 is usually a layer disposed directly on (i.e., in contact with) the second layer 12. When the second layer 12 is a layer disposed on a part of a surface of the first layer 11 as shown in FIGs. 1 to 3, the tackiness layer 14 is a layer disposed on the first layer 11 and also on the second layer 12. In this case, the tackiness layer 14 is usually a layer disposed directly on (i.e., in contact with) each of the first layer 11 and the second layer 12. Hereinafter, the tackiness layer 14 disposed on at least the second layer 12 is referred to as "tackiness layer (A)" for discrimination between this tackiness layer and a tackiness layer disposed at another position.

The first layer 11 is a layer capable of reflecting one of clockwise circularly polarized light and counterclockwise circularly polarized light and of allowing transmission of the other circularly polarized light. The first layer 11 includes a layer 11a of a resin having cholesteric regularity. The first layer 11 may be a layer including the layer 11a of the resin having cholesteric regularity, and, if necessary, a layer 11b containing a norbornene-based resin, and an adhesive layer (or

tackiness layer) 11c. The second layer 12 is a layer capable of reflecting at least a portion of circularly polarized light rotating in the same direction as the rotation direction of the circularly polarized light that is reflected by the first layer 11 and of allowing transmission of the circularly polarized light rotating in the direction opposite to the rotation direction of the circularly polarized light that is reflected by the first layer 11. The second layer 12 is a layer containing flakes 12f of a resin having cholesteric regularity. In FIG. 1, the second layer 12 is a portion of a character pattern of "ABCD" that is formed directly on the layer 11b in the first layer 11. The second layer 12 is formed at a position where the entire area of the second layer 12 completely overlaps with the first layer 11.

FIG. 2 is a schematic view, and therefore the cross-sectional shape of the second layer 12 is schematically shown. Specifically, as the second layer 12, FIG. 2 shows a schematic cross-sectional shape of a layer that has a planar shape with a character pattern and a certain thickness.

The identification medium 10 may include a protective layer 16 disposed via an adhesive layer (or tackiness layer) 15 on a surface of the first layer 11 opposite to a surface on which the second layer 12 is disposed.

In the identification medium 10, when the tackiness layer (A) 14 is bonded to an adherend 20, an adhesion force F1 between the layer 11b in the first layer 11 and the second layer 12, an adhesion force F2 between the second layer 12 and the tackiness layer (A) 14, and an adhesion force F3 between the tackiness layer (A) 14 and the adherend 20 satisfy relationships of the following formulae (1) and (2).

$$F1 < F2 \quad (1)$$

$$F1 < F3 \quad (2)$$

In the identification medium 10, when the tackiness layer (A) 14 is disposed on the layer 11b in the first layer 11, the adhesion force F3 between the tackiness layer (A) 14 and the adherend 20 and an adhesion force F4 between the layer 11b in the first layer and the tackiness layer (A) 14 satisfy a relationship of the following formula (4).

$$F4 < F3 \quad (4)$$

According to the present embodiment, the adhesion forces between the respective layers of the identification medium and the adhesion force F3 between the tackiness layer (A) and the adherend satisfy specific relationships when bonding the identification medium to an adherend. As a result, the identification medium is separable between the first layer and the second layer during peeling after bonding the identification medium to the adherend. In other words, the identification medium according to the present embodiment can thereby be configured to separate the first layer from a layered portion of the second layer and the tackiness layer during peeling after the identification medium is bonded to the adherend.

The identification medium according to the present embodiment has a structure in which the first layer and the second layer are layered, and thereby expresses an optical function and allows for determination of authenticity by utilizing this function without using a special viewer. Accordingly, when the first layer is separated from the second layer, the optical function is lost, and the identification medium does not function. This can prevent reuse of the identification medium peeled from the adherend.

The optical function of the identification medium according to the present embodiment will be described by using the drawings.

FIG. 4 is an exploded cross-sectional view schematically illustrating a path of light when light enters from the second layer 12 side of the identification medium. FIG. 5 is an exploded cross-sectional view schematically illustrating a path of light when light enters from the first layer 11 side of the identification medium. FIGs. 4 and 5 illustrate as an example a case where the first layer 11 is a layer capable of reflecting clockwise circularly polarized light and of allowing transmission of counterclockwise circularly polarized light, the second layer 12 is a layer capable of reflecting at least a portion of the clockwise circularly polarized light and of allowing transmission of the counterclockwise circularly polarized light, that is, a layer that does not reflect or hardly reflects the counterclockwise circularly polarized light.

When non-polarized light A1 such as natural light enters from the second layer 12 side of the identification medium as shown in FIG. 4, at least a portion of clockwise circularly polarized light A1R of the non-polarized light A1 is reflected by the flakes of the second layer 12. The flakes contained in the second layer 12 are usually dispersed in the layer with the flakes being oriented in various directions, and therefore the circularly polarized light A1R is visually recognized as backscattering light A2R. On the other hand, of the non-polarized light A1, counterclockwise circularly polarized light A1L is transmitted through the second layer 12, and the counterclockwise circularly polarized light A1L that has been transmitted through the second layer 12 is transmitted through the first layer 11.

When the first layer 11 on which the second layer 12 is not disposed is irradiated with the non-polarized light A1 from the second layer 12 side, the clockwise circularly polarized light A1R of the non-polarized light A1 is specularly

reflected by the first layer 11, and becomes reflected light A3R. On the other hand, of the non-polarized light A1, the counterclockwise circularly polarized light A1L is transmitted through the first layer 11.

Subsequently, when the non-polarized light A1 enters from the first layer 11 side as shown in FIG. 5, the clockwise circularly polarized light A1R of the non-polarized light A1 is specularly reflected by the first layer 11, and becomes reflected light A3R. On the other hand, of the non-polarized light A1, the counterclockwise circularly polarized light A1L is transmitted through the first layer 11. At a region where the second layer 12 is disposed on the first layer 11, the counterclockwise circularly polarized light A1L that has been transmitted through the first layer 11 is transmitted through the second layer 12.

Therefore, when the identification medium is observed from the second layer 12 side, entering of the non-polarized light A1 from the second layer 12 side results in visual recognition of the backscattering light A2R at the region where the second layer 12 of the identification medium is disposed, and visual recognition of the reflected light A3R that is generated by specular reflection from the first layer 11 at the region where the second layer 12 is not disposed. Accordingly, an observer can visually recognize information of the second layer 12 from a difference between the backscattering light A2R and the reflected light A3R. When the non-polarized light A1 enters from the first layer 11 side, the amount of the counterclockwise circularly polarized light A1L transmitted at the region where the second layer 12 is disposed is at the same level as that at the region where the second layer 12 is not disposed in the identification medium. Therefore, when the identification medium is observed from the second layer side, the transmitted light A1L from the first layer side does not influence the visibility of the information of the second layer 12, or even if it influences the visibility, the influence can be at a very low level.

On the other hand, when the identification medium is observed from the first layer 11 side, the reflected light A3R is visually recognized on the entire surface of the first layer 11 by the irradiation with the non-polarized light A1 from the first layer 11 side. When the non-polarized light A1 enters from the second layer 12 side, the amount of the counterclockwise circularly polarized light A1L transmitted at the region where the second layer 12 is disposed is at the same level as that at the region 12 where the second layer is not disposed in the identification medium. Therefore, when the identification medium is observed from the first layer 11 side, the amounts of the reflected light A3R from the first layer 11 and the transmitted light A1L from the second layer 12 side that are observed on the entire surface of the first layer 11 can be made at the same level regardless of whether a region has the second layer 12 disposed or not. Accordingly, the information of the second layer 12 can be prevented from being visually recognized.

As described above, the identification medium according to the present embodiment allows for identifying of a difference in visibility between the front and back surfaces of the identification medium when the structure in which the first layer and the second layer are layered is observed from the front and back surfaces of the identification medium. However, if each of the first layer and the second layer is alone, it does not independently make a difference in visibility between the front and back surfaces, and thus, the identification function is lost. Therefore, the reuse of the identification medium can be prevented.

[1.1. Relationship of adhesion force]

When the tackiness layer (A) of the identification medium according to the present embodiment is bonded to an adherend, the adhesion force F1 between the first layer and the second layer and the adhesion force F2 between the second layer and the tackiness layer satisfy the relationship of the following formula (1).

$$F1 < F2 \quad (1)$$

In the present embodiment, when the first layer includes a plurality of layers, the "adhesion force F1 between the first layer and the second layer" refers to an adhesion force between a layer on which the second layer is directly disposed, in the first layer, and the second layer.

A difference (F2 - F1) between the adhesion force F2 and the adhesion force F1 is usually more than 0 N/10 mm, preferably 1 N/10 mm or more, and more preferably 2 N/10 mm or more, and is preferably 5 N/10 mm or less, and more preferably 4.5 N/10 mm or less.

When the tackiness layer (A) of the identification medium according to the present embodiment is bonded to the adherend, the adhesion force F1 between the first layer and the second layer and the adhesion force F3 between the tackiness layer (A) and the adherend satisfy the relationship of the following formula (2).

$$F1 < F3 \quad (2)$$

A difference (F3 - F1) between the adhesion force F3 and the adhesion force F1 is usually more than 0 N/10 mm, preferably 1 N/10 mm or more, and more preferably 2 N/10 mm or more, and is preferably 7 N/10 mm or less, and more

preferably 6.5 N/10 mm or less.

For the adhesion force F2 between the second layer and the tackiness layer (A) and the adhesion force F3 between the tackiness layer (A) and the adherend, for example, the adhesion force F2 may be more than the adhesion force F3 (F2 > F3), the adhesion force F3 may be more than the adhesion force F2 (F2 < F3), or the adhesion force F2 may be equal to the adhesion force F3 (F2 = F3).

When the identification medium includes the tackiness layer (A) disposed on the first layer, the adhesion force F3 between the tackiness layer (A) and the adherend, and the adhesion force F4 between the first layer and the tackiness layer (A) satisfy the relationship of the following formula (4).

$$F4 < F3 \quad (4)$$

In the present embodiment, when the first layer includes a plurality of layers, the "adhesion force F4 between the first layer and the tackiness layer (A)" refers to an adhesion force between a layer on which the tackiness layer (A) is directly disposed, in the first layer, and the tackiness layer (A).

A difference (F3 - F4) between the adhesion force F3 and the adhesion force F4 is usually more than 0 N/10 mm, preferably 1 N/10 mm or more, and more preferably 2 N/10 mm or more, and is preferably 6 N/10 mm or less, and more preferably 5.5 N/10 mm or less.

For the adhesion force F1 between the first layer and the second layer and the adhesion force F4 between the first layer and the tackiness layer (A), for example, the adhesion force F1 may be more than the adhesion force F4 (F1 > F4), the adhesion force F4 may be more than the adhesion force F1 (F1 < F4), or the adhesion force F1 may be equal to the adhesion force F4 (F1 = F4). In the present embodiment, it is preferable that the absolute value of a difference between the adhesion force F1 and the adhesion force F4 is small or there is no difference. This is because separability between the first layer and the second layer and separability between the first layer and the tackiness layer (A) can thereby be improved. The absolute value (|F2 - F1|) of the difference between the adhesion force F1 and the adhesion force F4 may be preferably 1 N/10 mm or less, and more preferably 0.8 N/10 mm, and preferably 0 N/10 mm, or 0.1 N/10 mm or more.

The specific strength of each force among the adhesion forces F1 to F4 is not particularly limited, and the strength of each force among the adhesion forces F1 to F4 is preferably within the range of 1 N/10 mm or more and 20 N/10 mm or less, for example.

It is preferable that, when the identification medium according to the present embodiment is bonded to the adherend, each force among the adhesion forces between the respective layers disposed on the side of the surface of the first layer on which the second layer is disposed and the adhesion force between the tackiness layer (A) and the adherend (in FIG. 3, the adhesion forces F1 to F4) is smaller than each force among the adhesion forces between the respective layers disposed on the side of the surface of the first layer opposite to the surface on which the second layer is disposed (in FIG. 3, the adhesion forces F5 and F6). When the first layer includes a plurality of layers, each force among the adhesion forces between the respective layers disposed on the side of the surface of the first layer on which the second layer is disposed and the adhesion force between the tackiness layer (A) and the adherend (in FIG. 3, the adhesion forces F1 to F4) is preferably smaller than each force among the adhesion forces between the respective layers in the first layer (in FIG. 3, the adhesion forces F7 and F8). This is because when the adhesion forces F1 to F8 of the respective layers constituting the identification medium satisfy the above-mentioned relationships, the first layer can be easily separated from the second layer during peeling of the identification medium bonded to the adherend.

The adhesion forces between the respective layers of the identification medium and the adhesion force between the tackiness layer (A) and the adherend may be measured by a 90° peel test using the force gauge, as follows.

The identification medium is cut to produce a sample having a width of 10 mm, and the sample was bonded to an adherend. Of an interlayer to be measured, a layered portion between a layer opposite to a tackiness layer side and a layer positioned at the outermost surface (if the outermost surface layer is measured, a single layer) is pinched by a tip of a force gauge (e.g., "Standard type digital force gauge ZTS-100N" manufactured by Imada Co., Ltd.), the layered portion (or the single layer) is pulled in a direction normal to the surface of the adherend at a speed of 300 mm/min, and the strength of traction force when peeling occurs may be measured as an adhesion force. The measurement may be performed, for example, under conditions of a temperature of 22°C±10°C and a humidity of 50%±20%.

When it is difficult to pinch each layer of the identification medium by the tip of the force gauge, an evaluation sample is prepared using constituent materials that are the same as those for two layers positioned in the interlayer to be measured, and is subjected to the above-mentioned 90° peel test. Thus, the adhesion force can be measured.

The specific strength of each force among the adhesion forces between the respective layers of the identification medium and the adhesion force between the tackiness layer (A) and the adherend is not particularly limited, and the specific strength may be adjusted by selecting a material used for each of the layers. For the selection of the material, it is preferable that the adhesion force is measured in advance by the above-mentioned 90° peel test and the material is selected based on the measurement results.

[1.2. Tension of tackiness layer (A)]

With regard to the identification medium according to the present embodiment, it is preferable that a tension T1 that deforms the tackiness layer (A) and the adhesion force F3 between the tackiness layer and the adherend satisfy the relationship of the following formula (3).

$$T1 < F3 \quad (3)$$

When the identification medium satisfying the above-mentioned relationship between the tension T1 and the adhesion force F3 is peeled after the identification medium is bonded to the adherend, the tackiness layer (A) is flexible and stretchable during peeling of the layered portion of the second layer and the tackiness layer (A) that is separated from the identification medium from the adherend. Therefore, the second layer transferred on the tackiness layer (A) cannot deform in conformity with the deformation of the tackiness layer, and is broken, and therefore the reuse of the identification medium can be prevented. In other words, the identification medium according to the present embodiment can be configured such that the tackiness layer is deformed and the second layer is thereby broken as a result of peeling of the tackiness layer in the layered portion separated from the identification medium from the adherend.

A difference between the adhesion force F3 and the tension T1 is usually more than 0 N/10 mm, preferably 1 N/10 mm or more, and more preferably 2 N/10 mm or more, and is preferably 5 N/10 mm or less, and more preferably 4.5 N/10 mm or less.

The strength of the tension T1 is, for example, 1 N/10 mm or more, and is, for example, 20 N/10 mm or less.

The tension T1 that deforms the tackiness layer (A) may be measured by a 90° peel test using the force gauge, as follows.

A tackiness layer piece having a width of 10 mm formed from a tackiness layer (tackiness agent) used for the tackiness layer (A) is prepared, and this piece is bonded to an adherend while leaving a remaining space portion that has a certain width from one end of the tackiness layer piece. The space portion is pinched by a tip of a force gauge (e.g., "Standard type digital force gauge ZTS-100N" manufactured by Imada Co., Ltd.), the tackiness layer is pulled in a direction normal to the surface of the adherend at a speed of 300 mm/min, and the strength of traction force when the space portion begins to be stretched may be measured as a tension. The measurement may be performed, for example, under conditions of a temperature of 22°C±10°C and a humidity of 50%±20%.

For the selection of the material for the tackiness layer (A), it is preferable that the tension is measured in advance by the above-mentioned 90° peel test and the material is selected from the measurement result.

[1.3. Layer constituting identification medium]

The identification medium of the present embodiment includes at least the first layer, the second layer, and the tackiness layer (A).

[1.3.1. First layer]

The first layer is a layer capable of reflecting one of clockwise circularly polarized light and counterclockwise circularly polarized light and of allowing transmission of the other circularly polarized light. The first layer includes a layer of a resin having cholesteric regularity (hereinafter also referred to as a "cholesteric resin layer").

(Cholesteric resin layer)

The cholesteric regularity possessed by the resin layer having cholesteric regularity is a structure in which the angles of molecular axes in stacking planes are shifted (twisted) as the planes are observed sequentially passing through the stacked planes, such that molecular axes in a first plane are oriented in a certain direction, molecular axes in a subsequent plain stacking on the first plane are oriented in a direction shifted by a small angle with respect to that of the first plane, and molecular axes in still another plane are oriented in a direction of a further shifted angle. That is, in a case where molecules in the layer have the cholesteric regularity, the molecules are aligned in a manner in which many molecular layers are formed in the resin layer. In a certain layer A among such multiple molecular layers, molecules are aligned in such a manner that axes of the molecules are directed in a certain direction. In the neighboring layer B, molecules are aligned in a direction that is shifted to form an angle with the direction in the layer A. In the further neighboring layer C, molecules are aligned in a direction that is further shifted to form an angle with the direction in the layer B. Thus, in the multiple molecular layers, the angles of the axes of the molecules are continuously shifted to form a structure in which molecules are twisted. The structure in which the directions of the molecular axes are twisted as described above serves as an optically chiral structure.

The cholesteric resin layer usually has a circularly polarized light separation function. That is, the cholesteric resin layer has a property of allowing transmission of one circularly polarized light of the clockwise circularly polarized light and the counterclockwise circularly polarized light and reflecting a portion of or all of the other type of circularly polarized light. The cholesteric resin layer reflects circularly polarized light while maintaining its chirality.

The wavelength for which the circularly polarized light separation function is exerted depends on the pitch of the helical structure in the cholesteric resin layer. The pitch of the helical structure is the distance in the plane normal direction in the helical structure from an original plane to another plane in which the angle of the direction of the molecular axis that has been gradually and continuously shifted as proceeding through the planes from the original plane returns to the original molecular axis direction again. By changing the size of the pitch of the helical structure, it is possible to change the wavelength for which the circularly polarized light separation function is exerted.

The cholesteric resin layer may be obtained by, for example, providing a film of a cholesteric liquid crystal composition on a supporting body that is suitable for forming a resin layer and curing the film of the cholesteric liquid crystal composition. The obtained layer may be used as a cholesteric resin layer as it is. The cholesteric resin layer is a layer made of a film of a material itself that is capable of reflecting one of clockwise circularly polarized light and counterclockwise circularly polarized light and that allows transmission of the other circularly polarized light. Thus, the cholesteric resin layer itself may be used as the first layer.

As the cholesteric liquid crystal composition for forming the cholesteric resin layer, for example, a composition containing a liquid crystal compound and capable of exhibiting a cholesteric liquid crystal phase when the composition is made in a form of a film on a supporting body may be used. Herein, as the liquid crystal compound, a liquid crystal compound that is a polymer compound and a polymerizable liquid crystal compound may be used. In order to obtain high thermal stability, a polymerizable liquid crystal compound is preferably used. By polymerizing such a polymerizable liquid crystal compound in a state of exhibiting the cholesteric regularity, a film of the cholesteric liquid crystal composition may be cured, and as a result, a non-liquid crystal resin layer that is cured while exhibiting the cholesteric regularity may be obtained.

Examples of suitable cholesteric resin layers having a high reflectance in the wavelength region of 420 nm to 650 nm may include (i) a cholesteric resin layer in which the size of the pitch of the helical structure is changed stepwise, and (ii) a cholesteric resin layer in which the size of the pitch of the helical structure is continuously changed.

(i) The cholesteric resin layer in which the pitch of the helical structure is changed stepwise may be obtained by forming a plurality of cholesteric resin layers having different pitches of the helical structure. As a specific example, such a cholesteric resin layer may be produced by preparing a plurality of cholesteric resin layers having different pitches of the helical structure in advance, and then fixing each of the cholesteric resin layers via a tackiness agent or an adhesive. Alternatively, such a cholesteric resin layer may be produced by forming a cholesteric resin layer, and sequentially forming other cholesteric resin layers thereon.

(ii) The cholesteric resin layer in which the size of the pitch of the helical structure is continuously changed is not particularly limited by the production method. A preferable example of the method for producing such a cholesteric resin layer is a method in which a cholesteric liquid crystal composition that contains a polymerizable liquid crystal compound for forming a cholesteric resin layer is applied, preferably, on another layer such as an orientation film to obtain a layer of the liquid crystal composition. In this method, the layer is then cured by light irradiation and/or warming treatment performed one or more times in a state in which the pitch of the helical structure is continuously changed. Such an operation is an operation of expanding the reflection band of the cholesteric resin layer, and is thus referred to as a broadband treatment. By performing the broadband treatment, even a cholesteric resin layer having a thickness as thin as, for example, 5 μm or less can achieve a wide reflection band, which is preferable.

As a preferable embodiment of the cholesteric liquid crystal composition to be subjected to the broadband treatment, a cholesteric liquid crystal composition (X) described in detail below may be mentioned.

As the cholesteric resin layer in which the sieze of the pitch of the helical structure is continuously changed, one layer may be solely used, and a plurality of layers may be used in a stacked manner. For example, as the first resin layer, a combination of cholesteric layers may be used, including a cholesteric resin layer that exhibits a circularly polarized light separation function in a partial region of the visible light region and a cholesteric resin layer that exhibits a circularly polarized light separation function in another region, to exhibit a circularly polarized light separation function in a wide region of the visible light region.

As described above, the cholesteric resin layer may be a resin layer composed of only one layer or a resin layer composed of two or more layers. When two or more layers are provided, the cholesteric resin layer may include two or more cholesteric resin layers of the above-mentioned (i), two or more cholesteric resin layers of the above-mentioned (ii), or two or more layers of a combination of both of them. The number of layers constituting the cholesteric resin layer is preferably 1 layer to 100 layers, and more preferably 1 layer to 20 layers, from the viewpoint of facilitating its production. If a cholesteric resin layer having a high reflectance is obtained with only a single layer as a result of the aforementioned broadband

treatment, the identification medium of the preferable embodiment may be obtained by using only this one single layer.

The cholesteric liquid crystal composition (X) contains a compound represented by the following formula (5) and a specific rod-like liquid crystal compound. As each of the compound represented by the formula (5) and the rod-like liquid crystal compound, one type of the compound may be solely used. Alternatively, two or more types of the compounds may be used in combination at any ratio.

Each of these components will be described in the following.

$$R^1\text{-}A^1\text{-}B\text{-}A^2\text{-}R^2 \qquad (5)$$

In the formula (5), $R^1$ and $R^2$ are each independently a group selected from the group consisting of a linear or branched alkyl group of 1 to 20 carbon atoms, a linear or branched alkylene oxide group of 1 to 20 carbon atoms, a hydrogen atom, a halogen atom, a hydroxyl group, a carboxyl group, a (meta)acrylic group, an epoxy group, a mercapto group, an isocyanate group, an amino group, and a cyano group.

The alkyl group and the alkylene oxide group may be unsubstituted or substituted with one or more halogen atoms. In addition, the halogen atom, hydroxyl group, carboxyl group, (meta)acrylic group, epoxy group, mercapto group, isocyanate group, amino group, and cyano group may be bonded to a C1-C2 alkyl group and alkylene oxide group.

Preferable examples of $R^1$ and $R^2$ may include a halogen atom, a hydroxyl group, a carboxyl group, a (meth) acrylic group, an epoxy group, a mercapto group, an isocyanate group, an amino group, and a cyano group.

It is preferable that one or more of $R^1$ and $R^2$ are a reactive group. When the compound represented by the above-mentioned formula (5) has a reactive group as at least one of $R^1$ and $R^2$, the compound is fixed in the cholesteric resin layer at the time of curing, so that a stronger layer can be formed. Herein, examples of the reactive group may include a carboxyl group, a (meth)acrylic group, an epoxy group, a mercapto group, an isocyanate group, and an amino group.

In the formula (5), $A^1$ and $A^2$ each independently represent a group selected from the group consisting of a 1,4-phenylene group, a 1,4-cyclohexylene group, a 1,4-cyclohexenylene group, a 4,4'-biphenylene group, a 4,4'-bicyclohexylene group, and a 2,6-naphthylene group. The 1,4-phenylene group, 1,4-cyclohexylene group, 1,4-cyclohexenylene group, 4,4'-biphenylene group, 4,4'-bicyclohexylene group, and 2,6-naphthylene group are not substituted or may be substituted with one or more substituents such as a halogen atom, a hydroxyl group, a carboxyl group, a cyano group, an amino group, and a C1-10 alkyl group and halogenated alkyl group. When two or more substituents are present in each of $A^1$ and $A^2$, they may be the same as, or different from, each other.

Particularly preferable examples of $A^1$ and $A^2$ may include groups selected from the group consisting of a 1,4-phenylene group, a 4,4'-biphenylene group, and a 2,6-naphthylene group. These aromatic ring skeletons are relatively rigid compared to alicyclic skeletons, and the affinity of the groups to mesogens of the rod-like liquid crystal compound is high and the orientation uniformity becomes much higher.

In the formula (5), B is selected from the group consisting of a single bond, -O-, -S-, -S-S-, -CO-, -CS-, - OCO-, $-CH_2-$, $-OCH_2-$, -CH=N-N=CH-, -NHCO-, -OCOO-, $-CH_2COO-$, and $-CH_2OCO-$.

Particularly preferable examples of B may include a single bond, -OCO-, and -CH=N-N=CH-.

At least one of the compounds of the formula (5) preferably has liquid crystal properties and preferably has chirality. It is preferable that the cholesteric liquid crystal composition (X) contains a mixture of a plurality of optical isomers as the compounds of the formula (5). For example, the cholesteric liquid crystal composition (X) may contain a mixture of a plurality of types of enantiomers and/or diastereomers. It is preferable that at least one of the compounds of the formula (5) has a melting point in the range of 50°C to 150°C.

When the compound of the formula (5) has liquid crystal properties, it is preferable that $\Delta n$ is high. By using a liquid crystal compound with high $\Delta n$ as the compound of the formula (5), $\Delta n$ of the cholesteric liquid crystal composition (X) can be improved, and a cholesteric resin layer capable of reflecting circularly polarized light in a wide wavelength range can be produced. $\Delta n$ of at least one of the compounds of the formula (5) is preferably 0.18 or more, and more preferably 0.22 or more. The upper limit of $\Delta n$ may be set to, for example, 0.50.

Particularly preferable specific examples of the compound of the formula (5) may include the following compounds (A1) to (A10):

[Chemical formula 1]

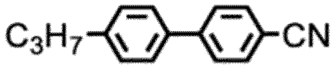
(A1)

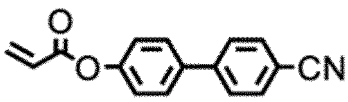
(A2)

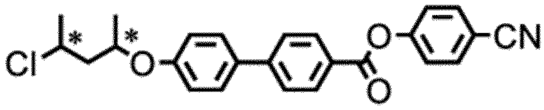
(A3)

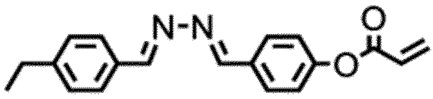
(A4)

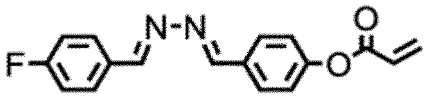
(A5)

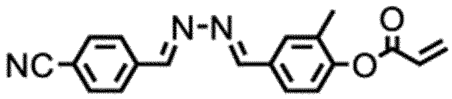
(A6)

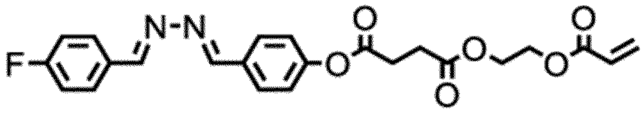
(A7)

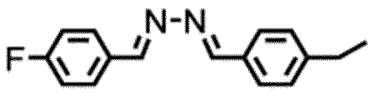
(A8)

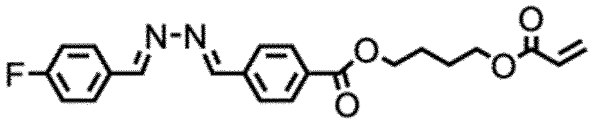
(A9)

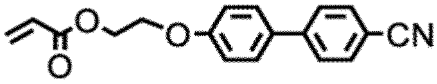
(A10)

In the above-mentioned compound (A3), "*" represents a chiral center.

The cholesteric liquid crystal composition (X) usually contains a rod-like liquid crystal compound having $\Delta n$ of 0.18 or more and at least two or more reactive groups within one molecule.

As the rod-like liquid crystal compound, a compound represented by the formula (6) may be mentioned.

$$R^3\text{-}C^3\text{-}D^3\text{-}C^5\text{-}M\text{-}C^6\text{-}D^4\text{-}C^4\text{-}R^4 \qquad (6)$$

In the formula (6), $R^3$ and $R^4$ are reactive groups, each independently representing a group selected from the group consisting of a (meth)acrylic group, a (thio)epoxy group, an oxetane group, a thietanyl group, an aziridinyl group, a pyrrole group, a vinyl group, an allyl group, a fumarate group, a cinnamoyl group, an oxazoline group, a mercapto group, an iso(thio)cyanate group, an amino group, a hydroxyl group, a carboxyl group, and an alkoxysilyl group. When the rod-like liquid crystal compound has these reactive groups, a cured product obtained by curing the cholesteric liquid crystal composition has a high film strength sufficient for practical use. Herein, a film strength sufficient for practical use usually corresponds to a pencil hardness (JIS K5400) of HB or higher, and preferably H or higher. By having such a high film strength, the resulting layer becomes less susceptible to scratches, and thereby handleability can be improved.

In the formula (6), $D^3$ and $D^4$ each independently represent a group selected from the group consisting of a single bond, a linear or branched alkyl group of 1 to 20 carbon atoms, and a linear or branched alkylene oxide group of 1 to 20

carbon atoms.

In the formula (6), $C^3$ to $C^6$ each independently represent a group selected from the group consisting of a single bond, -O-, -S-, -S-S-, -CO-, -CS-, -OCO-, $-CH_2-$, $-OCH_2-$, -CH=N-N=CH-, -NHCO-, -OCOO-, $-CH_2COO-$, and $-CH_2OCO-$.

In the formula (6), M represents a mesogen group. Specifically, M represents a group obtained by bonding 2 to 4 skeletons selected from the group consisting of azomethines, azoxies, phenyls, biphenyls, terphenyls, naphthalenes, anthracenes, benzoic acid esters, cyclohexanecarboxylic acid phenyl esters, cyanophenylcyclohexanes, cyano-substituted phenylpyrimidines, alkoxy-substituted phenylpyrimidines, phenyldioxanes, tolanes, and alkenylcyclohexylbenzonitriles, which may or may not be substituted, by a bonding group such as -O-, -S-, -S-S-, - CO-, -CS-, -OCO-, $-CH_2-$, $-OCH_2-$, -CH=N-N=CH-, -NHCO-, - OCOO-, $-CH_2COO-$, and $-CH_2OCO-$.

Examples of the substituents which the mesogen group M may have may include a halogen atom, an alkyl group of 1 to 10 carbon atoms optionally having a substituent, a cyano group, a nitro group, $-O-R^5$, $-O-C(=O)-R^5$, $-C(=O)-O-R^5$, $-O-C(=O)-O-R^5$, $-NR^5-C(=O)-R^5$, $-C(=O)-NR^5R^7$, and $-O-C(=O)-NR^5R^7$. Herein, $R^5$ and $R^7$ represent a hydrogen atom or an alkyl group of 1 to 10 carbon atoms. When $R^5$ and $R^7$ are an alkyl group, the alkyl group may have an intervening -O-, -S-, -O-C(=O)-, -C(=O)-O-, -O-C(=O)-O-, $-NR^6-C(=O)-$, $-C(=O)-NR^6-$, $-NR^6-$, or -C(=O)- (with a proviso that cases where the intervening group is two or more contiguous -O-'s or - S-'s are excluded). Herein, $R^6$ represents a hydrogen atom or an alkyl group of 1 to 6 carbon atoms.

Examples of the substituents in the above-mentioned "alkyl group of 1 to 10 carbon atoms optionally having a substituent" may include a halogen atom, a hydroxyl group, a carboxyl group, a cyano group, an amino group, an alkoxy group of 1 to 6 carbon atoms, an alkoxyalkoxy group of 2 to 8 carbon atoms, an alkoxyalkoxyalkoxy group of 3 to 15 carbon atoms, an alkoxycarbonyl group of 2 to 7 carbon atoms, an alkylcarbonyloxy group of 2 to 7 carbon atoms, and an alkoxycarbonyloxy group of 2 to 7 carbon atoms.

It is preferable that the rod-like liquid crystal compound has an asymmetric structure. Herein, the asymmetric structure refers to a structure in which $R^3-C^3-D^3-C^5-$ and $-C^6-D^4-C^4-R^4$ differ from each other in the formula (6) with the mesogen group M as its center. By using the compound with an asymmetric structure as the rod-like liquid crystal compound, it is possible to further enhance the orientation uniformity.

$\Delta n$ of the rod-like liquid crystal compound is preferably 0.18 or more, and more preferably 0.22 or more. When a rod-like liquid crystal compound with a $\Delta n$ value of 0.30 or more is used, the absorption edge on the long wavelength side of the ultraviolet absorption spectrum may extend to the visible range. However, a rod-like liquid crystal compound with the absorption edge of the spectrum extending to the visible range can also be used as long as the spectrum does not adversely affect the desired optical properties. By using a rod-like liquid crystal compound with such a high $\Delta n$ value, a cholesteric resin layer with high optical properties (e.g., a property of selectively reflecting circularly polarized light) can be obtained. The upper limit of $\Delta n$ may be set to, for example, 0.50.

Preferable specific examples of the rod-like liquid crystal compound may include the following compounds (B1) to (B14). However, such rod-like liquid crystal compounds are not limited to the following compounds.

[Chemical formula 2]

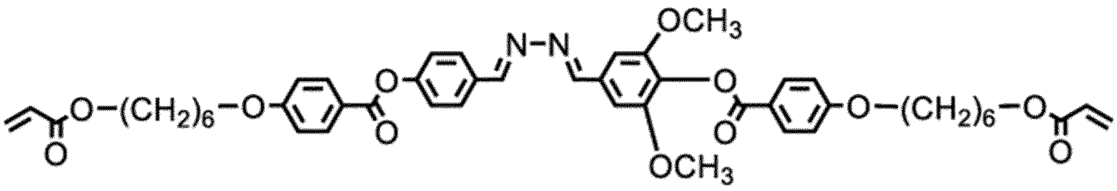

(B1)

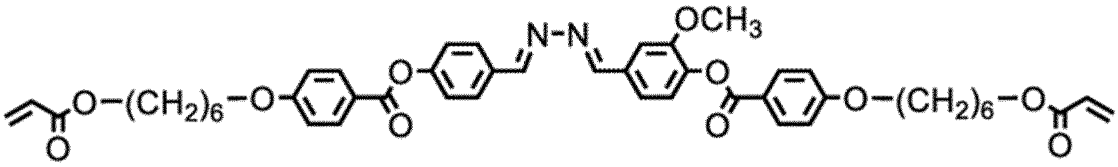

(B2)

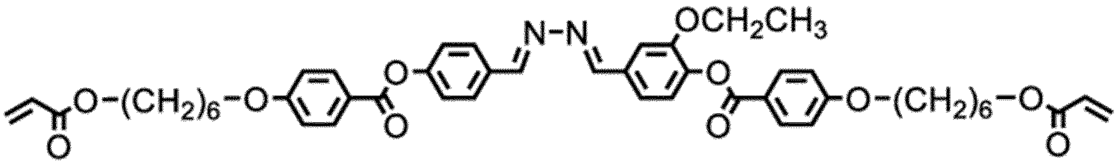

(B3)

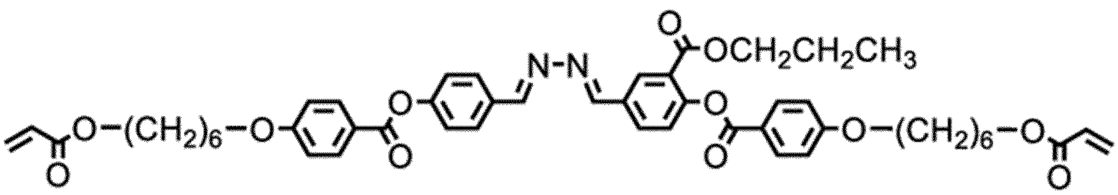

(B4)

[Chemical formula 3]

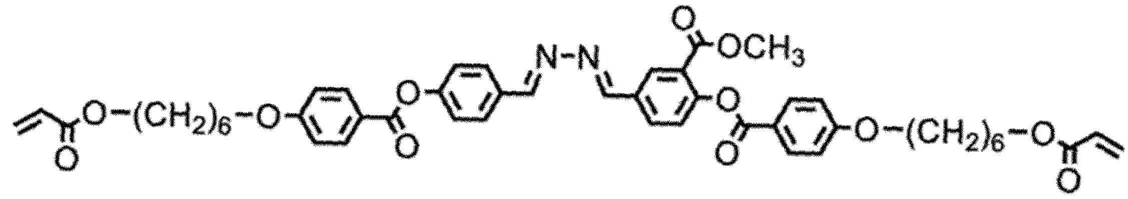

(B5)

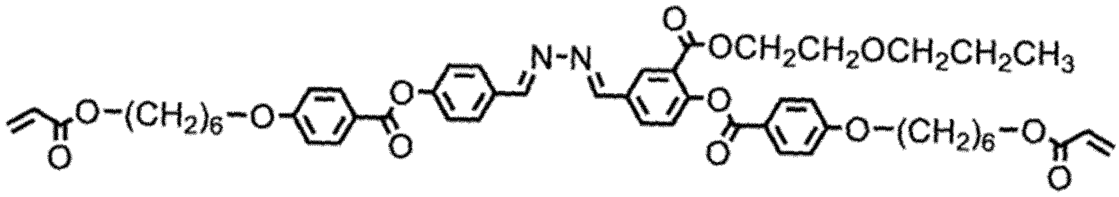

(B6)

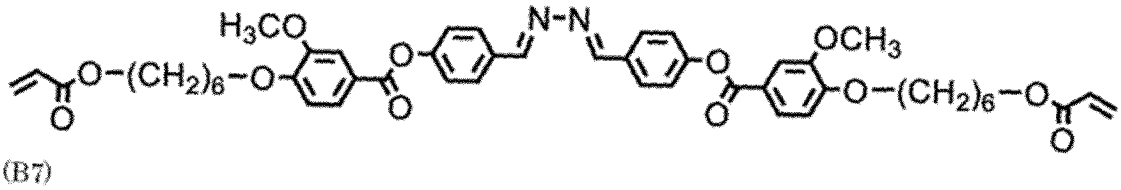

(B7)

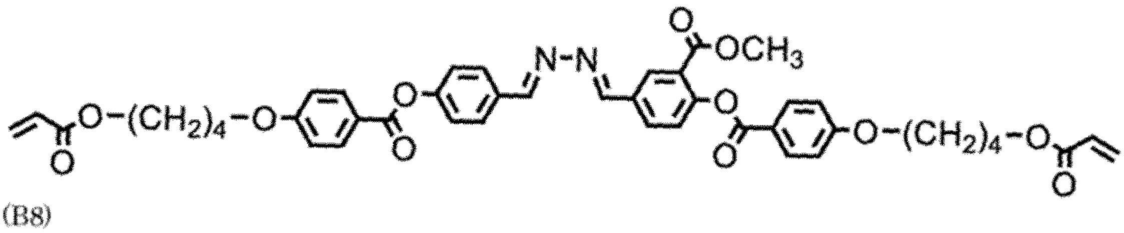

(B8)

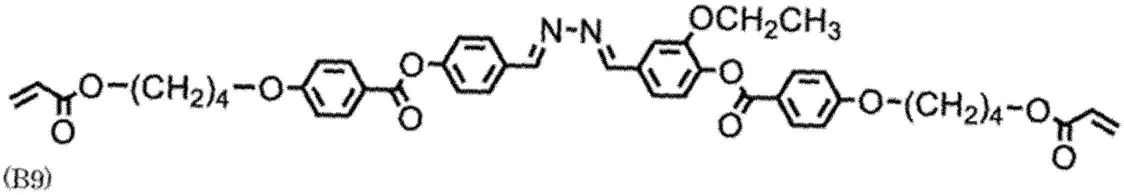

(B9)

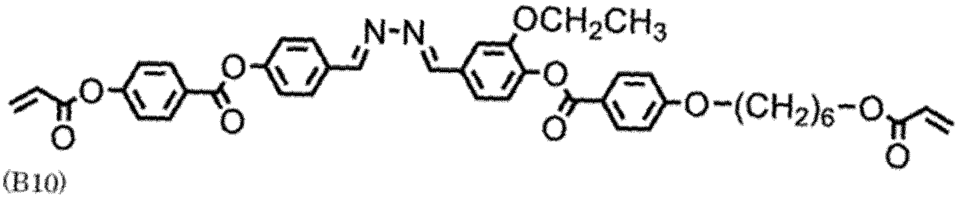

(B10)

[Chemical formula 4]

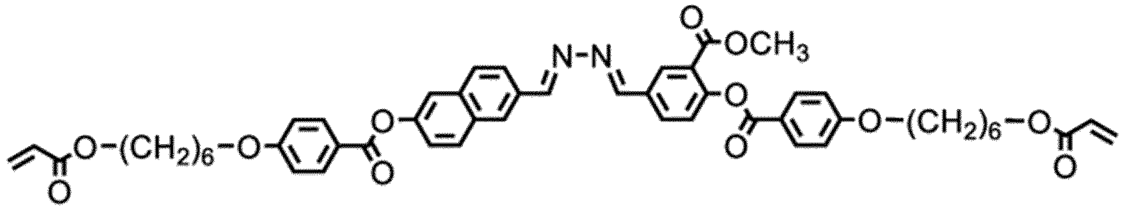

(B11)

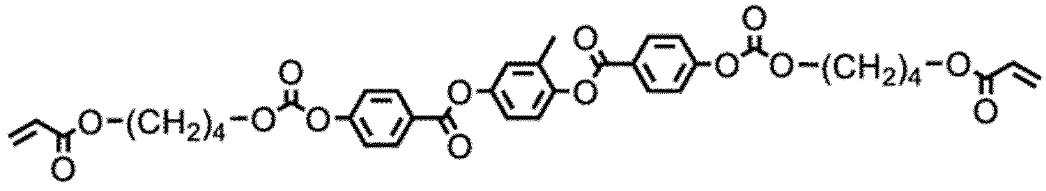

(B12)

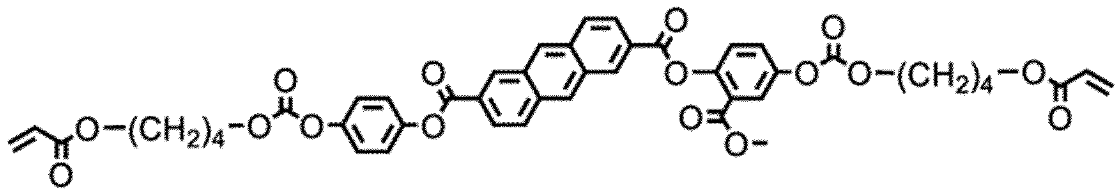

(B13)

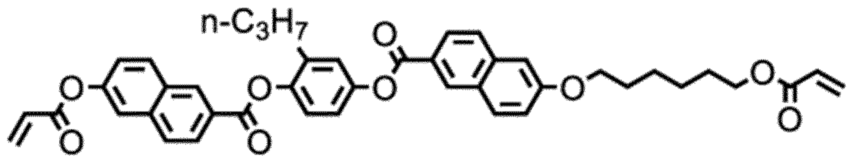

(B14)

With regard to the cholesteric liquid crystal composition (X), the weight ratio represented by (total weight of the compound of the formula (5))/(total weight of the rod-like liquid crystal compound) is preferably 0.05 or more, more preferably 0.1 or more, and particularly preferably 0.15 or more, and is preferably 1 or less, more preferably 0.65 or less, and particularly preferably 0.45 or less. By setting the above-mentioned weight ratio to the lower limit value or more of the above-mentioned range, the orientation uniformity can be enhanced. By setting the weight ratio to the upper limit value or less, the orientation uniformity can be enhanced and the stability of the liquid crystal phase can be enhanced as well. Furthermore, since $\Delta n$ of the liquid crystal composition can be made high, it is possible to stably obtain desired optical properties (e.g., a property of selectively reflecting circularly polarized light). Herein, the total weight is the weight of a compound when one type thereof is used, and is the total weight when two or more types thereof are used.

In the cholesteric liquid crystal composition (X), the molecular weight of the compound of the formula (5) is preferably less than 600, and the molecular weight of the rod-like liquid crystal compound is preferably 600 or more. With this configuration, the compound of the formula (5) can enter the gap of the rod-like liquid crystal compound that has a molecular weight larger than that of the compound of the formula (5), and so the orientation uniformity can be improved.

The cholesteric liquid crystal composition such as the cholesteric liquid crystal composition (X) may optionally contain a crosslinking agent for improving film strength and durability after curing. As the crosslinking agent, those that can react simultaneously at the time of curing the film of the cholesteric liquid crystal composition, can accelerate the reaction when a heat treatment is applied after curing, or can spontaneously cause the reaction by moisture, thereby increasing the

crosslinking density of the cholesteric resin layer, and that does not deteriorate the orientation uniformity, can be appropriately selected and used. Therefore, for example, an optional crosslinking agent which allows the composition to cure with ultraviolet rays, heat, moisture, or the like may be suitably used. Examples of the crosslinking agents may include a polyfunctional acrylate compound such as trimethylolpropane tri(meth)acrylate, pentaerythritol tri(meth)acrylate, pentaerythritol tetra(meth)acrylate, dipentaerythritol hexa(meth)acrylate, and 2-(2-vinyloxyethoxy)ethyl acrylate; an epoxy compound such as glycidyl (meth)acrylate, ethylene glycol diglycidyl ether, glycerin triglycidyl ether, and pentaerythritol tetraglycidyl ether; an aziridine compound such as 2,2-bishydroxymethylbutanol-tris[3-(1-aziridinyl)propionate], 4,4-bis(ethyleneiminocarbonylamino)diphenylmethane, and trimethylolpropane-tri-β-aziridinyl propionate; an isocyanate compound such as hexamethylene diisocyanate, an isocyanurate-type isocyanate derived from hexamethylene diisocyanate, a biuret-type isocyanate, and an adduct-type isocyanate; a polyoxazoline compound having an oxazoline group on the side chain; and an alkoxysilane compound such as vinyltrimethoxysilane, N-(2-aminoethyl)3-aminopropyltrimethoxysilane, 3-aminopropyltrimethoxysilane, 3-glycidoxypropyltrimethoxysilane, 3-(meth)acryloxypropyltrimethoxysilane, and N-(1,3-dimethylbutylidene)-3-(triethoxysilyl)-1-propanamine. As the crosslinking agent, one type thereof may be solely used, and two or more types thereof may also be used in combination at any ratio. A publicly known catalyst may be used depending on the reactivity of the crosslinking agent. By using a catalyst, productivity can be improved in addition to the improvement in film strength and durability of the cholesteric resin layer.

The amount of the crosslinking agent is preferably such that the amount of the crosslinking agent in the cured film obtained by curing the film of the cholesteric liquid crystal composition is 0.1% by weight to 15% by weight. By setting the amount of the crosslinking agent to the lower limit value or more of the above-mentioned range, the crosslinking density can be effectively increased. By setting the amount to the upper limit value or less, the stability of the film of the cholesteric liquid crystal composition can be increased.

The cholesteric liquid crystal composition may optionally contain a photoinitiator. As the photoinitiator, for example, a publicly known compound that generates a radical or an acid by ultraviolet or visible light may be used. Specific examples of the photoinitiator may include benzoin, benzyl dimethyl ketal, benzophenone, biacetyl, acetophenone, Michler's ketone, benzyl, benzyl isobutyl ether, tetramethyl thiuram mono(di)sulfide, 2,2-azobisisobutyronitrile, 2,2-azobis-2,4-dimethylvaleronitrile, benzoyl peroxide, di-tert-butyl peroxide, 1-hydroxycyclohexyl phenyl ketone, 2-hydroxy-2-methyl-1-phenyl-propane-1-one, 1-(4-isopropylphenyl)-2-hydroxy-2-methylpropane-1-one, thioxanthone, 2-chlorothioxanthone, 2-methylthioxanthone, 2,4-diethylthioxanthone, methylbenzoylformate, 2,2-diethoxyacetophenone, β-ionone, β-bromostyrene, diazoaminobenzene, α-amylcinnamic aldehyde, p-dimethylaminoacetophenone, p-dimethylaminopropiophenone, 2-chlorobenzophenone, pp'-dichlorobenzophenone, pp'-bis-diethylaminobenzophenone, benzoin ethyl ether, benzoin isopropyl ether, benzoin n-propyl ether, benzoin n-butyl ether, diphenyl sulfide, bis(2,6-methoxybenzoyl)-2,4,4-trimethyl-pentylphosphine oxide, 2,4,6-trimethylbenzoyldiphenyl-phosphine oxide, bis(2,4,6-trimethylbenzoyl)-phenylphosphine oxide, 2-methyl-1[4-(methylthio)phenyl]-2-morpholinopropane-1-one, 2-benzyl-2-dimethylamino-1-(4-morpholinophenyl)-butane-1-one, anthracene benzophenone, α-chloroanthraquinone, diphenyldisulfide, hexachlorobutadiene, pentachlorobutadiene, octachlorobutene, 1-chlormethylnaphthalene, 1,2-octanedione, carbazoleoxime compounds such as 1-[4-(phenylthio)-2-(o-benzoyloxime)] and 1-[9-ethyl-6-(2-methylbenzoyl)-9H-carbazol-3-yl]ethanone 1-(o-acetyloxime), (4-methylphenyl)[4-(2-methylpropyl)phenyl]iodonium hexafluorophosphate, 3-methyl-2-butynyltetramethylenesulfonium hexafluoroantimonate, and diphenyl-(p-phenylthiophenyl)sulfonium hexafluoroantimonate. As these compounds, one type thereof may be solely used, and two or more types thereof may also be used in combination at any ratio. If necessary, a tertiary amine compound as a publicly known photosensitizer or polymerization accelerator may be used to control curability.

The amount of the photoinitiator is preferably 0.03% by weight to 7% by weight in the cholesteric liquid crystal composition. By setting the amount of the photoinitiator to the lower limit value or more of the above-mentioned range, the degree of polymerization can be increased, so that the film strength of the cholesteric resin layer can be increased. By setting the amount to the upper limit value or less, the orientation of the liquid crystal material can be improved, so that the liquid crystal phase of the cholesteric liquid crystal composition can be stabilized.

The cholesteric liquid crystal composition may optionally contain a surfactant. As the surfactant, for example, those that do not prevent orientation may be appropriately selected and used. Preferable examples of such a surfactant may include a nonionic surfactant containing a siloxane or a fluorinated alkyl group in a hydrophobic group moiety. Among these, an oligomer having two or more hydrophobic group moieties in one molecule is particularly suitable. Specific examples of these surfactants may include PolyFox PF-151N, PF-636, PF-6320, PF-656, PF-6520, PF-3320, PF-651, and PF-652 available from OMNOVA Solutions Inc.; Ftergent FTX-209F, FTX-208G, and FTX-204D available from Neos Co., Ltd.; and Surflon KH-40 available from AGC Seimi Chemical Co., Ltd. As the surfactants, one type thereof may be solely used, and two or more types thereof may also be used in combination at any ratio.

The amount of the surfactant is preferably set such that the amount of the surfactant in the cured film obtained by curing the cholesteric liquid crystal composition is 0.05% by weight to 3% by weight. By setting the amount of the surfactant to the lower limit value or more of the above-mentioned range, the orientation regulating force at the air interface can be increased, and therefore, orientation defects can be suppressed. By setting the amount to the upper limit value or less, it is

possible to suppress the decrease in the orientation uniformity due to the excessive surfactant entering between the liquid crystal molecules.

The cholesteric liquid crystal composition may optionally contain a chiral agent. Usually, the twisting direction of the cholesteric resin layer may be appropriately selected by choosing the type and structure of the chiral agent to be used. In a case where the twist is in the right direction, a chiral agent for imparting dextrorotation may be used, and in a case where the twist is in the left direction, a chiral agent for imparting levorotation may be used. Specific examples of the chiral agent that can appropriately be used may include those described in Japanese Patent Application Laid-Open No. 2005-289881 A, Japanese Patent Application Laid-Open No. 2004-115414 A, Japanese Patent Application Laid-Open No. 2003-66214 A, Japanese Patent Application Laid-Open No. 2003-313187 A, Japanese Patent Application Laid-Open No. 2003-342219 A, Japanese Patent Application Laid-Open No. 2000-290315 A , Japanese Patent Application Laid-Open No. Hei. 6-072962 A, U.S. Patent No. 6468444, International Publication No. 98/00428, Japanese Patent Application Laid-Open No. 2007-176870 A and the like, and they may be available as Paliocolor LC756 from BASF. As the chiral agents, one type thereof may be solely used, and two or more types thereof may also be used in combination at any ratio.

The amount of the chiral agent may be optionally set within a range in which the chiral agent does not decrease the desired optical properties. The specific amount of the chiral agent is usually 1% by weight to 60% by weight in the cholesteric liquid crystal composition.

If necessary, the cholesteric liquid crystal composition may further contain other optional components. Examples of the optional components may include a solvent, a polymerization inhibitor for improving pot life, an antioxidant for improving durability, an ultraviolet absorber, and a light stabilizer. As the optional components, one type thereof may be solely used, and two or more types thereof may also be used in combination at any ratio. The amount of these optional components may be freely set within a range in which the optional components do not decrease the desired optical properties.

The method for producing the cholesteric liquid crystal composition is not particularly limited and the cholesteric liquid crystal composition may be produced by mixing the above-mentioned respective components.

The cholesteric resin layer may be obtained, for example, by subjecting a surface of a supporting body made of a film of a transparent resin or the like to a treatment such as a corona discharge treatment and a rubbing treatment, if necessary, further providing an orientation film if necessary, further forming a film of a cholesteric liquid crystal composition on this surface, and further performing an orientation treatment and/or a curing treatment if necessary.

Examples of the supporting body that can be used for forming the cholesteric resin layer may include a single-layer or multilayer film of a synthetic resin such as an alicyclic olefin polymer, a chain olefin polymer such as polyethylene and polypropylene, triacetyl cellulose, polyvinyl alcohol, polyimide, polyarylate, a polyester such as polyethylene terephthalate, polycarbonate, polysulfone, polyethersulfone, a modified acrylic polymer, an epoxy resin, polystyrene, and an acrylic resin.

The orientation film may be formed, for example, by applying a corona discharge treatment or the like to the surface of a supporting body if necessary, applying a solution, in which a material for the orientation film is dissolved in a solvent, onto the surface, drying the applied solution, and then performing a rubbing treatment on the resulting film.

Examples of the material for the orientation film may include cellulose, a silane coupling agent, polyimide, polyamide, polyvinyl alcohol, epoxy acrylate, a silanol oligomer, polyacrylonitrile, a phenol resin, polyoxazole, and cyclized polyisoprene.

The coating of the cholesteric liquid crystal composition on the supporting body or on the orientation film may be performed by a publicly known method, for example, an extrusion coating method, a direct gravure coating method, a reverse gravure coating method, a die coating method, a bar coating method, or the like.

The orientation treatment may be performed, for example, by warming a film of a cholesteric liquid crystal composition at 50°C to 150°C for 0.5 minute to 10 minutes. By subjecting the film to the orientation treatment, the cholesteric liquid crystal composition in the film can be well oriented.

The curing treatment may be performed by conducting once or more of a combination of light irradiation and a warming treatment.

The warming condition may be at a temperature of, for example, usually 40°C or higher, preferably 50°C or higher, and usually 200°C or lower, preferably 140°C or lower, and for a time of usually 1 second or longer, preferably 5 seconds or longer, and also usually 3 minutes or shorter, preferably 120 seconds or shorter.

The light used for light irradiation includes not only visible light but also ultraviolet light and other electromagnetic waves. The light irradiation may be performed, for example, by irradiating light with wavelengths of 200 nm to 500 nm for 0.01 second to 3 minutes.

Herein, by alternately repeating the weak UV irradiation at 0.01 mJ/cm$^2$ to 50 mJ/cm$^2$ and the heating a plurality of times, it is possible to obtain a circularly polarized light separating function with a wide reflection bandwidth due to the size of the pitches of the helical structures being continuously greatly changed.

Furthermore, the cholesteric resin layer may be obtained by completely polymerizing the liquid crystal compound by

irradiating the cholesteric resin layer with relatively strong ultraviolet rays such as at 50 mJ/$cm^2$ to 10,000 mJ/$cm^2$ after performing the broadening of the reflection bandwidth by the above-mentioned weak ultraviolet ray irradiation or the like. The broadening of the reflection bandwidth and the irradiation of strong ultraviolet rays described above may be performed under air, or some or all of the processes thereof may be performed in an atmosphere in which the oxygen concentration is controlled (e.g., under a nitrogen atmosphere).

The number of performing the process of applying the cholesteric liquid crystal composition onto another layer such as an orientation film and curing the composition is not limited to one time, but the application and curing may be repeated a plurality of times to form two or more cholesteric resin layers. However, when a cholesteric liquid crystal composition such as the cholesteric liquid crystal composition (X) is used, it is possible to easily form a cholesteric resin layer that contains a well-oriented rod-like liquid crystal compound with $\Delta n$ of 0.18 or more and that has a thickness of 5 μm or more even by only one time of the process of applying and curing the cholesteric liquid crystal composition.

The cholesteric resin layer thus obtained as it is may be used as the first layer together with the supporting body and the orientation film. If necessary, the supporting body or the like may be peeled off, and only the cholesteric resin layer may be transferred to be used as the first layer.

The thickness of the first layer is preferably 2 μm or more, and more preferably 3 μm or more, and is preferably 1000 μm or less, and more preferably 500 μm or less. By setting the thickness of the first layer to the lower limit value or more, it is possible to make it difficult to visually recognize the information of the second layer when observing the second layer from the first layer side, thereby making it possible to more clearly determine the authenticity. By setting the thickness of the first layer to the upper limit value or less, the transparency can be enhanced. Herein, the thickness of the first layer refers to the total thickness of respective layers when the first layer includes two or more layers, and refers to the thickness of the first layer when the first layer includes one layer. When a supporting body is used, the in-plane retardation of the supporting body is preferably 20 nm or less, more preferably 10 nm or less, and ideally 0 nm. By setting the retardation to the upper limit value or less, the circularly polarized light generated by the first layer and the second layer is maintained, making it possible to more clearly determine the authenticity.

(Layer containing norbornene-based resin)

The first layer may be a layered body of the cholesteric resin layer described above and a layer containing a norbornene-based resin (hereinafter also referred to as a "norbornene-based resin layer"). The norbornene-based resin layer tends to have lower adhesion to other layers than the cholesteric resin layer, and so use of the norbornene-based resin layer as the surface of the first layer on which the second layer is provided can reduce the adhesion forces F1 and F4, making it easier to adjust the adhesion forces F1 to F8 between the layers of the identification medium.

The norbornene-based resin is a resin containing at least one type of a norbornene-based polymer and a hydrogenated product thereof, and is usually a thermoplastic resin.

Examples of the norbornene-based polymers and hydrogenated products thereof may include a ring-opening polymer of a monomer having a norbornene structure and a hydrogenated product thereof; and an addition polymer of a monomer having a norbornene structure and a hydrogenated product thereof. Examples of the ring-opening polymer of a monomer having a norbornene structure may include a ring-opening homopolymer of one type of monomer having a norbornene structure, a ring-opening copolymer of two or more types of monomers having a norbornene structure, and a ring-opening copolymer of a monomer having a norbornene structure and an optional monomer copolymerizable therewith. Furthermore, examples of the addition polymer of a monomer having a norbornene structure may include an addition homopolymer of one type of monomer having a norbornene structure, an addition copolymer of two or more types of monomers having a norbornene structure, and an addition copolymer of a monomer having a norbornene structure and an optional monomer copolymerizable therewith. Examples of these polymers may include those disclosed in Japanese Patent Application Laid-open No. 2002-321302 A.

Specific examples of the norbornene-based polymers and hydrogenated products thereof may include products "ZEONOR" manufactured by ZEON Corporation), products "ARTON" manufactured by JSR Corporation, and products "TOPAS" manufactured by TOPAS ADVANCED POLYMERS.

The thickness of the norbornene-based resin layer is not particularly limited, and may be, for example, 10 μm or more and 100 μm or less. The retardation of the norbornene-based resin layer is preferably 20 nm or less, more preferably 10 nm or less, and ideally 0 nm.

(Adhesive layer or tackiness layer)

When the first layer includes the cholesteric resin layer and the norbornene-based resin layer, both layers are bonded together via an adhesive layer or a tackiness layer, if necessary.

Examples of the adhesive used for the adhesive layer may include an acryl-based adhesive, an epoxy-based adhesive, a urethane-based adhesive, a polyester-based adhesive, a polyvinyl alcohol-based adhesive, a modified

polyvinyl alcohol-based adhesive, a polyolefin-based adhesive, a modified polyolefin-based adhesive, a polyvinyl alkyl ether-based adhesive, a rubber-based adhesive, a vinyl chloride-vinyl acetate-based adhesive, an SEBS-based (styrene-ethylene-butylene-styrene copolymer) adhesive, an ethylene-based adhesive such as an ethylene-styrene copolymer, an ethylene-methyl (meth)acrylate copolymer, and an acrylic acid ester-based adhesive such as an ethyleneethyl (meth) acrylate copolymer. The adhesive is preferably an ultraviolet curable adhesive from the viewpoint of curing the adhesive in a short period of time, and may be a polyvinyl alcohol or a modified polyvinyl alcohol-based aqueous adhesive from the viewpoint of making the adhesive layer thinner.

The thickness of the adhesive layer is usually greater than 0 μm, preferably 5 μm or less when an ultraviolet curable adhesive is used, and is usually greater than 0 μm, preferably 0.1 μm or less when an aqueous adhesive is used.

The tackiness agent used in the tackiness layer and the thickness thereof may be appropriately selected from those described as the tackiness agent and the thickness as the material of the tackiness layer (A) to be described later, and used.

The adhesive used in the adhesive layer and the tackiness agent used in the tackiness layer are usually selected such that each of the adhesion force between the cholesteric resin layer and the adhesive layer (or the tackiness layer) (in Fig. 3, the adhesion force F5) and the adhesion force between the norbornene-based resin layer and the adhesive layer (or the tackiness agent layer) (in Fig. 3, the adhesion force F6) are larger than each of the adhesion force between respective layers provided on the surface of the first layer opposite to the surface on which the second layer is disposed and the adhesion force between the tackiness layer (A) and the adherend (in Fig. 3, the adhesion forces F1 to F4).

[1.3.2. Second Layer]

The second layer is a layer disposed in a manner of overlapping with the first layer, and is a layer disposed directly on (i.e., in contact with) the first layer or indirectly (i.e., separated from the first layer by, e.g., having another layer therebetween) in a manner of overlapping with the first layer.

As shown in FIG. 1, the second layer 12 may be a layer disposed on a part of the surface of the first layer 11. Alternatively, the second layer may be a layer disposed on the entire surface of the first layer, which is not shown in the drawings. The second layer 12 being a layer disposed on a part of the surface of the first layer 11 means that there are a region having the second layer 12 and a region not having the second layer 12 on the same plane of the first layer 11, regardless of the sizes of these regions.

When the second layer 12 is a layer disposed on a part of the surface of the first layer 11, the second layer 12 may have a predetermined pattern shape, for example, including a character, a numeral, and a figure. The second layer may have a pattern configured, for example, by repeatedly disposing a certain shape such as a straight line or a figure. It is preferable that the second layer has a predetermined pattern shape or constitutes a pattern since the deformation of the second layer can be easily recognized during peeling of the tackiness layer (A), and the reuse of the identification medium can thus be effectively prevented.

The second layer is a layer capable of reflecting at least a portion of circularly polarized light rotating in the same direction as the rotation direction of the circularly polarized light that is reflected by the first layer and of allowing transmission of the circularly polarized light rotating in the direction opposite to the rotation direction of the circularly polarized light that is reflected by the first layer. In other words, the second layer is a layer that does not reflect or hardly reflects circularly polarized light rotating in the direction opposite to the rotation direction of circularly polarized light that is reflected by the first layer.

The second layer is a layer containing flakes of a resin having cholesteric regularity (also referred to as a "cholesteric resin"). Even when a cholesteric resin layer suitable as the first layer 11 is formed into a pulverized product, the cholesteric resin layer is capable of reflecting one of clockwise circularly polarized light and counterclockwise circularly polarized light and of allowing transmission of the other circularly polarized light within at least a portion of a visible light region. Therefore, it is preferable that such a pulverized product is used as the flakes in the second layer.

The volume-average particle diameter (D50) of the flakes contained in the second layer is preferably 70 μm or more, and more preferably 75 μm or more, and is preferably 300 μm or less, more preferably 200 μm or less, and particularly preferably 150 μm or less. This is because when the volume-average particle diameter of the flakes is equal to or more than the above-mentioned lower limit value, the bottom surface area of the flakes can be made relatively large, and the side surface area can be made relatively small. Accordingly, the visibility of the front and back surfaces of the identification medium can be improved. When the volume-average particle diameter of the flakes is equal to or less than the above-mentioned value of condition, the reflected light from the second layer can be favorably scattered, and the information of the second layer can be visually recognized with ease.

The present inventor deduces that the reason in which the volume-average particle diameter of the flakes falling within the above-mentioned range can improve the visibility of the front and back surfaces of the identification medium is as follows. However, the technical scope of the present invention is not restricted by the mechanism described below.

FIG. 6 is a perspective view schematically illustrating a flake and a path of light that enters the flake. As shown in

FIG. 6, each of the flakes 12f contained in the second layer usually has bottom surfaces (upper surface t and lower surface u) and a side surface s. With regard to such a flake 12f, of non-polarized light A1 entering one bottom surface (upper surface t), at least a portion of one type of circularly polarized light (for example, clockwise circularly polarized light A1R) is reflected on the surface and inside of the flake 12f, and emitted from the upper surface u, and the other type of circularly polarized light (for example, counterclockwise circularly polarized light A1L) is transmitted and emitted from the other bottom surface (lower surface u). On the other hand, a portion of the non-polarized light A1 entering the side surface s of the flake 12f is reflected by interface reflection between the flake 12f and an outside thereof as non-polarized and reflected light A4. Furthermore, non-polarized light A1 entering the inside of the flake 12f from the side surface s of the flake 12f is emitted from the lower surface u of the flake as emitted light A5 having a reduced degree of polarization. The first layer is capable of allowing transmission of one type of circularly polarized light in a rotating direction opposite to the direction of the other type of circularly polarized light that can be reflected by the second layer. In the case of observation of this identification medium from the first layer side, there is a concern that, in the region where the second layer is disposed and in the vicinity of that region, the aforementioned one type of circularly polarized light of the non-polarized and reflected light A4, and, if the emitted light A5 is almost non-polarized, the aforementioned one type of circularly polarized light in that non-polarized light might be transmitted through the first layer. The transmission of such type of light might be visually recognized by the observer. Consequently, the information of the second layer might be seen through the first layer.

As a countermeasure against this, when the volume-average particle diameter (D50) of the flakes is equal to or more than a specific value, the area of one bottom surface of the flakes can be made relatively large, the area of the side surface of the flakes can be made relatively small, and a reduction in the degree of polarization of the emitted light by the interface reflection of non-polarized light at the side surface of the flakes and incidence of non-polarized light from the side surface of the flaks can thus be suppressed. This can reduce see-through recognition of the information of the second layer during observation of the identification medium from the first layer side.

The particle diameter of each of the flakes refers to the diameter of the bottom surface when the flakes are assumed to have a disk form. The volume-average particle diameter (D50) of the flakes is a 50% volume-average particle diameter obtained by measurement and calculation through a dry method with a particle size distribution measuring device (for example, a laser diffraction/scattering particle size distribution analyzer "LA-960V series" manufactured by Horiba, Ltd.) based on a laser scattering and diffraction method. The 50% volume-average particle diameter is a particle diameter at a point where the cumulative frequency calculated from a small-diameter side in the obtained particle size distribution (by volume) reaches 50%. In the above-mentioned measurement device, measurement of the diameter of the bottom surface of the flakes may be performed with assumption that the flakes are in true spherical shape having the above-mentioned diameter.

The ratio of the area of one bottom surface relative to the area of the side surface (bottom surface area / side surface area, or S ratio) of the flakes is preferably 1.5 or more, and more preferably 1.7 or more, and is preferably 3.0 or less, and more preferably 2.7 or less. When the S ratio is equal to or more than the above-mentioned lower limit value, the see-through of the second layer during observation of the identification medium from the first layer side can be effectively suppressed. When the S ratio is equal to or less than the above-mentioned upper limit value, the reflected light from the second layer can be favorably scattered, and thereby recognizability of the information of the second layer can be improved.

The ratio of the area of one bottom surface relative to the area of the side surface (bottom surface area / side surface area, or S ratio) of the flakes refers to the ratio of the area of one bottom surface relative to the area of the side surface when the flakes are assumed to have a disk form, and is a value calculated by the following formula (7) from the volume-average particle diameter of the flakes and the thickness of the flakes.

$$\text{S Ratio} = \{\pi(r/2)^2\}/(\pi r L) \quad (7)$$

In the formula (7), r (μm) is the volume-average particle diameter of the flakes (the diameter of the bottom surface of the flakes), and L (μm) is the thickness of the flakes.

The thickness of the flakes may be appropriately selected according to a desired volume-average particle diameter of the flakes, and is not particularly limited. The thickness thereof is preferably 2 μm or more, and more preferably 3 μm or more, and is preferably 10 μm or less, and more preferably 7.5 μm or less. For example, the thickness of the flakes may be the same as or different from the thickness of the first layer.

The average refractive index of the flakes may be appropriately selected according to the cholesteric resin that is the material for the flakes. The average refractive index is, for example, 1.4 or more, and preferably 1.5 or more, and is preferably 1.8 or less, and more preferably 1.7 or less. This is because when the average refractive index of the flakes falls within the above-mentioned range, the refractive index difference between the flakes and a binder can be made small, and interface reflection between the flakes and the outside thereof can be suppressed.

The average refractive index of the flakes may be measured as the average refractive index of the cholesteric

resin layer having the same thickness as that of the flakes. The cholesteric resin layer has a helical structure configured by helically disposing a rod-like liquid crystal compound contained in the cured product of the cholesteric liquid crystal composition. The molecules of the rod-like liquid crystal compound have anisotropy of refractive index. Therefore, evaluation of the refractive index of the overall cholesteric resin layer can be performed by measuring the refractive index in each of four in-plane directions of the cholesteric resin layer, and then calculating the average refractive index that is the arithmetic average. The average refractive index of the cholesteric resin layer may be determined, for example, by measuring the refractive indices in four in-plane directions (x1, x2, x3, and x4) of a single layer of the cholesteric resin layer with a prism coupler (for example, model 2010 manufactured by Metricon Corporation) under conditions of a measurement wavelength of 560 nm, a temperature of 20°C±2°C, and a humidity of 60±5%, and calculating the arithmetic average value from the obtained four refractive indices. Regarding the four in-plane directions x1, x2, x3, and x4, when x1 is a standard (0°), x2 may be a direction of 45°, x3 may be a direction of 90°, and x4 may be a direction of 135°.

The ratio of the area of a flake group per unit area of the second layer is preferably less than 60%, and more preferably 50% or less, and is preferably 20% or more, and may be 25% or more.

This is because when the ratio of the area of a flake group per unit area of the second layer is less than the above-mentioned upper limit value, overlapping of the flakes can be suppressed, and thereby the dispersion of the flakes with the bottom surface of the flakes tilting with respect to the surface direction of the second layer can be suppressed, leading to suppression of interface reflection of non-polarized light on the side surface. On the other hand, when the ratio of the area is equal to or more than the above-mentioned lower limit value, the visibility of the second layer can be improved.

The ratio of the area of the flake group per unit area of the second layer may be determined, for example, by observing the second layer with a digital microscope (for example, "VHX-7000" manufactured by Keyence Corporation), followed by image analysis with the digital microscope, measuring the area of the flakes per unit volume (1 $mm^2$) of the second layer, and calculating the total value.

From the viewpoint of clear identification of authenticity and high degree of freedom of design, it is preferable that the cholesteric resin that is the material for the flakes is one having a reflectance as high as possible, and thus having a high reflectance in the wavelength range for reflection.

The flakes of the cholesteric resin may be produced by, for example, a method for producing peel pieces described in Japanese Patent No. 6142714 B.

Together with the flakes of the cholesteric resin, flakes of a material having no polarization properties may be used. Examples of the flakes having no polarization properties may include flakes of at least one or more selected from carbon black, and an oxide, a nitride and an oxynitride of metals belonging to Groups 3 to 11 of the fourth period of the Periodic Table of the Elements. As these flakes, one type thereof may be solely used, and two or more types thereof may also be used in combination at any ratio.

In the present embodiment, the second layer may be produced, for example, by applying an ink containing a flake that is composed of a pulverized product of a cholesteric resin layer, a solvent, a binder, and, if necessary, an optional component, onto a supporting body, and drying the ink.

As the solvent, for example, an inorganic solvent such as water may be used, but an organic solvent is usually used. Examples of the organic solvents may include organic solvents such as ketones, alkyl halides, amides, sulfoxides, heterocyclic compounds, hydrocarbons, esters, and ethers. Among these, ketones are preferable in consideration of an environmental load. As the solvents, one type thereof may be solely used, and two or more types thereof may also be used in combination at any ratio.

The amount of the solvent is usually 40 parts by weight or more, preferably 60 parts by weight or more, and more preferably 80 parts by weight or more, and is usually 1000 parts by weight or less, preferably 800 parts by weight or less, and more preferably 600 parts by weight or less, relative to 100 parts by weight of the pulverized product of the cholesteric resin layer. By making the amount of the solvent fall within the above-mentioned range, the coating property of the ink can be improved.

As the binder, a polymer is usually used. Examples of the polymer may include a polyester-based polymer, an acryl-based polymer, a polystyrene-based polymer, a polyamide-based polymer, a polyurethane-based polymer, a polyolefin-based polymer, a polycarbonate-based polymer, and a polyvinyl-based polymer. As the binders, one type thereof may be solely used, and two or more types thereof may also be used in combination at any ratio.

The refractive index of the binder is preferably 1.4 or more, and preferably 1.5 or more, and is preferably 1.8 or less, and more preferably 1.7 or less. The refractive index of the binder may be such that the absolute value of the difference from the average refractive index of the flakes is preferably 0.2 or less, more preferably 0.1 or less, particularly preferably 0.05 or less, and ideally 0, and may be 0.001 or more. This is because when the refractive index of the binder and the absolute value of the difference between the average refractive index of the flakes and the refractive index of the binder fall within the above-mentioned respective ranges, the difference in refractive index from the binder can be reduced, and the interface reflection with the outside of the flakes can be suppressed.

The refractive index of the binder may be measured using a prism coupler (e.g., model 2010 manufactured by Metricon Corporation) under conditions of a measurement wavelength of 560 nm, a temperature of 20°C±2°C, and a

humidity of 60±5%.

The amount of the binder is usually 20 parts by weight or more, preferably 40 parts by weight or more, and more preferably 60 parts by weight or more, and is usually 1000 parts by weight or less, preferably 800 parts by weight or less, and more preferably 600 parts by weight or less, relative to 100 parts by weight of the pulverized product of the cholesteric resin layer. By making the amount of the binder fall within the above-mentioned range, the coating property of the ink can be improved. In addition, the pulverized product of the cholesteric resin layer can be stably fixed in the second layer.

Examples of optional components that the ink may contain may include an antioxidant, an ultraviolet absorber, a light stabilizer, and a bluing agent. As these components, one type thereof may be solely used, and two or more types thereof may also be used in combination at any ratio.

The second layer may be obtained by printing the above-mentioned ink on the first layer in a predetermined pattern and drying the ink to obtain the second layer as a layer containing flakes composed of a pulverized product of the cholesteric resin layer.

The above-mentioned ink may contain, instead of the polymer serving as the binder or in combination with the polymer, a monomer(s) of the polymer. In this case, a second layer containing flakes composed of a pulverized product of the cholesteric resin layer and a binder may be produced by applying the ink onto a supporting body, drying the ink, and then polymerizing a monomer(s). When the ink contains a monomer(s), the ink preferably contains a polymerization initiator.

[1.3.3. Tackiness layer (A)]

The tackiness layer is a layer disposed on the second layer. If the identification medium has, as the second layer, a layer disposed on a part of the surface of the first layer, the tackiness layer is a layer disposed on the first layer and the second layer.

Examples of the tackiness agent as a material of the tackiness layer may include tackiness agents such as a rubber-based tackiness agent, an acryl-based tackiness agent, a polyvinyl ether-based tackiness agent, a urethane-based tackiness agent, a silicone-based tackiness agent, and a polyolefin-based tackiness agent. Among these, an acryl-based tackiness agent and a polyolefin-based tackiness agent are preferable from the viewpoint of heat resistance and productivity, with an acryl-based tackiness agent being particularly preferable. As these tackiness agents, one type thereof may be solely used, and two or more types thereof may also be used in combination at any ratio.

The refractive index of the tackiness layer (A) is preferably 1.4 or more, and preferably 1.5 or more, and is preferably 1.8 or less, and more preferably 1.7 or less. The refractive index of the tackiness layer (A) may be such that the absolute value of the difference from the refractive index of the binder in the second layer is preferably 0.2 or less, more preferably 0.1 or less, particularly preferably 0.05 or less, and ideally 0, and may be 0.001 or more. This is because, by making the absolute value of the difference between the tackiness layer (A) and the refractive index of the binder in the second layer equal to or less than the above-mentioned upper limit, the interface reflection between the second layer and the tackiness layer (A) can be suppressed.

The refractive index of the tackiness layer (A) may be measured using a prism coupler (e.g., model 2010 manufactured by Metricon Corporation) under conditions of a measurement wavelength of 560 nm, a temperature of 20°C ±2°C, and a humidity of 60±5%.

The thickness of the tackiness layer is not particularly limited, but may be, for example, 1 μm or more and 200 μm or less.

[1.3.4. Optional configuration]

The identification medium may have, as an optional configuration, a protective layer provided via an adhesive layer or a tackiness layer on a surface of the first layer opposite to the surface on which the second layer is disposed.

As the protective layer, for example, a substrate having transparency may be used. Examples of the substrate that may be used as the material of the protective layer may include plastic films and sheets such as a vinyl chloride sheet and an acrylic resin sheet, and a glass substrate. The thickness of the protective layer may preferably be 50 μm or more and 1000 μm or less.

The visible light transmittance of the protective layer is preferably 80% or more, and more preferably 85% or more. From the viewpoint of maintaining the circularly polarized state of the first layer 11, the retardation of the protective layer in in-plane directions is preferably 20 nm or less, more preferably 10 nm or less, and ideally 0. Visible light transmittance may be measured using an ultraviolet-visible spectrometer.

The haze value of the protective layer is preferably 1.0% or less, and preferably 0.5% or less. The haze value is ideally 0%. Haze may be measured using a haze meter (turbidimeter) according to JIS K7361-1997.

The adhesive as the material of the adhesive layer and the thickness thereof, and the tackiness agent as the material of the tackiness layer and the thickness thereof may be appropriately selected from those described as the

materials of the adhesive layer and the tackiness agent layer, and used.

[1.4. Properties of identification medium]

With regard to the identification medium 10 according to the present embodiment, the ratio ($Ssf_2/s_2$) of $Ssf_2$ defined by the following formula (9) relative to $S_2$ defined by the following formula (8) is usually more than 0.7.
[Mathematical formula 1]

$$S_2=\int_{400}^{780} \{(Rf_2(\lambda))^*(Rf_2(\lambda))\}^\wedge(1/2)\cdot d\lambda \quad (8)$$

In the formula (8), λ represents a wavelength (nm), and $Rf_2$ (λ) represents a reflectance at the wavelength λ of the second layer. The $S_2$ value defined by the formula (8) is an integrated value of the reflectance $Rf_2$ of the second layer at wavelengths of 400 nm to 780 nm.
[Mathematical formula 2]

$$Ssf_2=\int_{400}^{780} \{(Rs(\lambda))^*(Rf_2(\lambda))\}^\wedge(1/2)\cdot d\lambda \quad (9)$$

In the formula (9), λ represents a wavelength (nm), and Rs (λ) represents a reflectance at the wavelength λ of the first layer. The $Ssf_2$ value defined by the formula (9) is an integrated value of square root of product of the reflectance Rs of the first layer and the reflectance $Rf_2$ of the second layer at wavelengths of 400 nm to 780 nm.

Rs (λ) and $Rf_2$ (λ) are a reflectance at a wavelength (λ) of a case wherein non-polarized light with a wavelength within 400 nm to 780 nm enters a layer of interest, and the reflectance may be measured with an ultraviolet-visible spectrophotometer (UV-Vis 550, manufactured by JASCO Corporation). The value measured with the above-mentioned device may include interface reflection, and therefore, in this case, the reflectances Rs (λ) and $Rf_2$ (λ) are calculated by subtracting the amount of the interface reflection.

When $Ssf_2/S_2$ is more than 0.7, the information of the second layer can be visually recognized with the naked eye during observation of the identification medium from the second layer side, and the information of the second layer cannot be visually recognized during observation of the inverted identification medium from the first layer side. Therefore, a large $Ssf_2/S_2$ value is effective for the determination of authenticity. The $Ssf_2/S_2$ value is preferably 0.75 or more, and more preferably 1.0 or more. When the $Ssf_2/S_2$ value is 1.0 or more, a difference in determining whether visual identification is possible or impossible among observers is substantially eliminated, and objective determination can be performed. The upper limit value of the $Ssf_2/S_2$ value is not particularly limited, and may be preferably 5 or less, and more preferably 3 or less. When the upper limit value falls within such a range, the information of the second layer, such as a character pattern, can be favorably visually recognized.

The reflectance at all points of the wavelengths in a wavelength region of 420 nm to 650 nm of non-polarized light entering the first layer is preferably 35% or more and 50% or less. The reflectance is more preferably 40% or more, and further preferably 45% or more. When the reflectance of non-polarized light entering the first layer falls within the above-mentioned range, the first layer may become a broadband layer, and thus the wavelength region where the reflection spectrum of the first layer overlaps with the reflection spectrum of the second layer can be increased, leading to an increase in the $Ssf_2/S_2$ value. The reflectance of non-polarized light entering the first layer may include that of interface reflection.

The wavelength of the reflected light from the first layer and the wavelength of the reflected light from the second layer are each usually in a visible light region, and there may or may not be a difference ΔE* between the hue of the reflected light from the first layer and the hue of the reflected light from the second layer. When there is a difference ΔE* between the hues, the value of the difference may be appropriately selected. The method for measuring the difference ΔE* between the hues will be described in Embodiment 2 described below.

The identification medium according to the present embodiment is preferably transparent or translucent. The identification medium 10 that is transparent or translucent is preferable since replication and counterfeiting of the identification medium can be made difficult. The transparency of the identification medium is not limited as long as the identification medium has a transparency to an extent such that, when the identification medium is placed on an article having a character, a picture, or the like printed thereon, the character or the like printed on the article can be visually

recognized through the identification medium. When the identification medium is transparent or translucent, the transmittance of non-polarized light entering the identification medium may be preferably 20% or more, and more preferably 40% or more. The upper limit of the transmittance is not limited, and may be, for example, 90%. The above-mentioned transmittance may be measured, for example, with the above-mentioned ultraviolet-visible spectrophotometer.

[2. Embodiment 2]

Hereinafter, an identification medium according to Embodiment 2 of the present invention will be described with reference to FIGs. 7 to 12.

FIG. 7 is an exploded perspective view schematically illustrating the identification medium according to Embodiment 2 of the present invention. FIG. 8 is a schematic plan view of the identification medium of FIG. 7 seen from a second layer side. FIG. 9 is a schematic plan view of the identification medium of FIG. 7 seen from a third layer side. FIG. 10 is a cross-sectional view schematically illustrating a cross section in an X2-X2 direction of FIGs. 8 and 9. FIG. 11 is an exploded cross-sectional view schematically illustrating a path of light when light enters from the second layer side of the identification medium. FIG. 12 is an exploded cross-sectional view schematically illustrating a path of light when light enters from the third layer side of the identification medium.

An identification medium 100 according to the present embodiment differs from that according to Embodiment 1 in that the identification medium 100 includes a third layer 113 disposed on a surface of a first layer 111 opposite to a surface on which a second layer 112 is disposed in a manner of overlapping with the first layer 111.

The identification medium 100 according to the present embodiment is an embodiment that is configured by disposing a third layer on a surface of the first layer 11 of the identification medium 10 according to Embodiment 1, the surface being opposite to a surface where the second layer 12 is disposed. In other words, the first layer 111 (a cholesteric resin layer 111a, a norbornene-based resin layer 111b, and an adhesive layer 111c), the second layer 112 containing flakes 112f, a tackiness layer (A) 114, a tackiness layer 115, and a protective layer 116 of the identification medium 100 according to the present embodiment correspond to the first layer 11 (the cholesteric resin layer 11a, the norbornene-based resin layer 11b, and the adhesive layer 11c), the second layer 12 containing the flakes 12f, the tackiness layer (A) 14, the adhesive layer 15, and the protective layer 16 of the identification medium 10 according to Embodiment 1, respectively. In the following description, a difference between Embodiment 2 and Embodiment 1 will be mainly described.

As shown in FIGs. 7 to 10, the identification medium 100 according to the present embodiment includes the first layer 111, the second layer 112 disposed in a manner of overlapping with the first layer 111, and the third layer 113 disposed on the surface of the first layer 111 opposite to the surface on which the second layer 112 is disposed in a manner of overlapping with the first layer 111. The third layer 113 is a layer capable of allowing transmission of the circularly polarized light rotating in a direction opposite to the rotation direction of the circularly polarized light that is reflected by the first layer 111, that is, a layer that does not reflect or hardly reflects that circularly polarized light. Furthermore, the third layer 113 is a layer containing flakes 113f of a resin having cholesteric regularity. In FIGs. 7 and 9, the third layer 113 is a portion of a character pattern of "EFG" formed directly on the lower (in FIGs. 10 and 13) surface of a substrate layer 114 (see FIG. 12). The third layer 113 is formed at a position where the entire area of the third layer 113 completely overlaps with the first layer 111.

Similarly to the identification medium 10 according to Embodiment 1, when the tackiness layer (A) 114 is bonded to an adherend (not shown), an adhesion force F1 between the layer 111b in the first layer 111 and the second layer 112, an adhesion force F2 between the second layer 112 and the tackiness layer (A) 114, and an adhesion force F3 between the tackiness layer (A) 114 and the adherend of the identification medium 100 satisfy a relationships of the following formulae (1) and (2), and when the tackiness layer (A) 14 is disposed on the layer 111b in the first layer 111, the adhesion force F3 between the tackiness layer (A) 14 and the adherend and an adhesion force F4 between the layer 111b in the first layer 111 and the tackiness layer (A) 114 satisfy the following formula (4) .

$$F1 < F2 \quad (1)$$

$$F1 < F3 \quad (2)$$

$$F4 < F3 \quad (4)$$

According to the present embodiment, the adhesion forces F1 and F2 between the respective layers of the identification medium and the adhesion force F3 between the tackiness layer and the adherend when the identification medium is bonded to the adherend satisfy specific relationships, and therefore the identification medium is separable between the first layer and the second layer during peeling of the identification medium bonded to the adherend. The

identification medium according to the present embodiment has a structure in which the first layer, the second layer, and the third layer are layered, and thereby expresses an optical function. Thus, the identification medium allows for determination of authenticity by utilizing this function without using a special viewer. Therefore, when the first layer is separated from the second layer, the optical function is lost, and the identification medium does not function. This can prevent the reuse of the identification medium peeled from the adherend.

The optical function of the identification medium according to the present embodiment will be described by using the drawings.

FIG. 11 is an exploded cross-sectional view schematically illustrating a path of light when light enters from the second layer 112 side of the identification medium. FIG. 12 is an exploded cross-sectional view schematically illustrating a path of light when light enters from the third layer 113 side of the identification medium. FIGs. 11 and 12 show an example in which the first layer 111 is a layer capable of reflecting clockwise circularly polarized light and of allowing transmission of the counterclockwise circularly polarized light, and the second layer 112 and the third layer 113 are a layer capable of reflecting at least a portion of the clockwise circularly polarized light and of allowing transmission of the counterclockwise circularly polarized light, that is, a layer that does not reflect or hardly reflects the counterclockwise circularly polarized light.

As shown in FIG. 11, when non-polarized light A1 such as natural light enters from the second layer 112 side, at least a portion of clockwise circularly polarized light A1R of the non-polarized light A1 is reflected by the flakes of the second layer 112. The flakes contained in the second layer 112 are usually dispersed with the flakes being oriented in various directions. Therefore, the circularly polarized light A1R is visually recognized as backscattering light A2R. On the other hand, of the non-polarized light A1, counterclockwise circularly polarized light A1L is transmitted through the second layer 112, and the counterclockwise circularly polarized light A1L that has been transmitted through the second layer 112 is transmitted through the first layer 111. Furthermore, at a region where the third layer 113 is disposed on the first layer 111, the counterclockwise circularly polarized light A1L that has been transmitted through the first layer 111 is transmitted through the third layer 113.

When the first layer 111 on which the second layer 112 is not disposed is irradiated with the non-polarized light A1 from the second layer 112 side, the clockwise circularly polarized light A1R of the non-polarized light A1 is specularly reflected by the first layer 111, and becomes reflected light A3R. On the other hand, of the non-polarized light A1, the counterclockwise circularly polarized light A1L is transmitted through the first layer 111. Furthermore, at the region where the third layer 113 is disposed on the first layer 111, the counterclockwise circularly polarized light A1L that has been transmitted through the first layer 111 is transmitted through the third layer 113.

As shown in FIG. 12, when non-polarized light A1 such as natural light enters from the third layer 113 side, at least a portion of clockwise circularly polarized light A1R of the non-polarized light A1 is reflected by the flakes of the third layer 113. The flakes contained in the third layer 113 are usually dispersed with the flakes being oriented in various directions. Therefore, the circularly polarized light A1R is visually recognized as backscattering light A2R. On the other hand, of the non-polarized light A1, counterclockwise circularly polarized light A1L is transmitted through the third layer 113, and the counterclockwise circularly polarized light A1L that has been transmitted through the third layer 113 is transmitted through the first layer 111. Furthermore, at a region where the second layer 112 is disposed on the first layer 111, the counterclockwise circularly polarized light A1L that has been transmitted through the first layer 111 is transmitted through the second layer 112.

When the first layer 111 on which the second layer 113 is not disposed is irradiated with the non-polarized light A1 from the third layer 113 side, the clockwise circularly polarized light A1R of the non-polarized light A1 is specularly reflected by the first layer 111, and becomes reflected light A3R. On the other hand, of the non-polarized light A1, the counterclockwise circularly polarized light A1L is transmitted through the first layer 111. Furthermore, at the region where the second layer 112 is disposed on the first layer 111, the counterclockwise circularly polarized light that has been transmitted through the first layer 111 is transmitted through the second layer 112.

Therefore, when the identification medium is observed from the second layer 112 side, entering of the non-polarized light A1 from the second layer 112 side results in visual recognition of the backscattering light A2R at the region where the second layer 112 of the identification medium is disposed, and visual recognition of the reflected light A3R that is generated by specular reflection at the region where the second layer 112 is not disposed. Accordingly, an observer can visually recognize information of the second layer 112 from a difference between the backscattering light A2R and the reflected light A3R. When the non-polarized light A1 enters from the third layer 113 side, the amount of the counterclockwise circularly polarized light A1L transmitted at the region where the third layer 113 is disposed is at the same level as that at the region where the third layer 113 is not disposed in the identification medium. Therefore, when the identification medium is observed from the second layer 112 side, the transmitted light A1L from the third layer 113 side does not influence the visibility of the information of the second layer 112, or even if it influences the visibility, the influence can be at a very low level. Specifically, the visual recognition of the information of the third layer 113 can be prevented.

In contrast, when the identification medium is observed from the third layer 113 side, entering of the non-polarized light A1 from the third layer 113 side results in visual recognition of the backscattering light A2R at the region where the third layer 113 of the identification medium is disposed, and visual recognition of the reflected light A3R that is generated by

specular reflection at a region where the third layer 113 is not disposed. Accordingly, an observer can visually recognize the information of the third layer 113 from a difference between the backscattering light A2R and the reflected light A3R. When the non-polarized light A1 enters from the second layer 112 side, the amount of the counterclockwise circularly polarized light A1L transmitted at the region where the second layer 112 is disposed is at the same level as that at the region where the second layer 112 is not disposed in the identification medium. Therefore, when the identification medium is observed from the third layer 113 side, the transmitted light A1L from the second layer 112 side does not influence the visibility of the information of the third layer 113, or even if it influences the visibility, the influence can be at a very low level. Specifically, the visual recognition of the information of the second layer 112 can be prevented.

As described above, the identification medium according to the present embodiment allows for identification of a difference in visibility between the front and back surfaces of the identification medium when the structure in which the third layer, the first layer, and the second layer are layered in this order is observed from the front and back surfaces of the identification medium. However, if each of a layered body of the third layer and the first layer, and the second layer that is a single layer is alone, it does not allow for the identification of an intended difference in visibility, and the identification function is lost. Therefore, the reuse of the identification medium can be prevented.

Furthermore, according to the present embodiment, information can be imparted to the second layer 112 and different information can be imparted to the third layer 113, and therefore the determination of authenticity can be more clearly performed, and an anti-counterfeit effect is improved.

With regard to the identification medium according to the present embodiment, the first layer, the second layer, and the optional configuration may be the same as those described in the identification medium according to Embodiment 1.

[2.1. Third Layer]

The third layer is a layer disposed in a manner of overlapping with the first layer, and is a layer disposed directly on (i.e., in contact with) the first layer or indirectly (i.e., separated from the first layer by, e.g, having as another layer therebetween) in a manner of overlapping with the first layer.

The third layer is a layer capable of allowing transmission of circularly polarized light rotating in a direction opposite to the rotation direction of circularly polarized light that is reflected by the first layer. In other words, the second layer is a layer that does not reflect or hardly reflects circularly polarized light rotating in the direction opposite to the rotation direction of circularly polarized light that is reflected by the first layer. Furthermore, the third layer is preferably a layer capable of reflecting at least a portion of circularly polarized light rotating in the same direction as the rotation direction of the circularly polarized light that is reflected by the first layer.

Since the third layer is a layer disposed on the surface of the first layer opposite to the surface on which the second layer is disposed, it is preferable that the adhesion force between the first layer and the third layer is larger than the adhesion forces between the respective layers disposed on the surface of the first layer on which the second layer is disposed and the adhesion force between the tackiness layer (A) and the adherend, that is, each force among the adhesion forces F1 to F4. When the third layer is disposed on the first layer via an additional layer, the adhesion force between the third layer and the additional layer is preferably larger than each of the above-mentioned adhesion forces F1 to F4.

The material contained in the third layer, the production method, and the properties of the third layer may be the same as those described in the sections of the second layer in Embodiment 1.

[2.2. Properties of identification medium]

With regard to the identification medium 100 according to the present embodiment, the ratio ($Ssf_3/s_3$) of $Ssf_3$ defined by the following formula (11) relative to $S_3$ defined by the following formula (10) is more than 0.7.
[Mathematical formula 3]

$$S_3 = \int_{400}^{780} \{(Rf_3(\lambda))*(Rf_3(\lambda))\}^\wedge(1/2)\cdot d\lambda \qquad (10)$$

In the formula (10), $Rf_3$ ($\lambda$) represents a reflectance at the wavelength ($\lambda$) of the third layer. The $S_3$ value defined by the formula (10) is an integrated value of the reflectance $Rf_3$ of the third layer.
[Mathematical formula 4]

$$Ssf_3 = \int_{400}^{780} \{(Rs(\lambda))*(Rf_3(\lambda))\}^{(1/2)} \cdot d\lambda \quad (11)$$

The $Ssf_3$ value defined by the formula (11) is an integrated value of square root of product of the reflectance Rs of the first layer and the reflectance $Rf_3$ of the third layer at wavelengths of 400 nm to 780 nm.

Rs ($\lambda$) and $Rf_3$ ($\lambda$) are a reflectance at a wavelength ($\lambda$) of a case wherein non-polarized light with a wavelength in 400 nm to 780 nm enters a layer of interest, and the reflectance may be measured with an ultraviolet-visible spectrophotometer (UV-Vis 550, manufactured by JASCO Corporation). The value measured with the above-mentioned device may include interface reflection, and therefore, in this case, the reflectances Rs ($\lambda$) and $Rf_3$ ($\lambda$) are calculated by subtracting the amount of the interface reflection.

When $Ssf_3/S_3$ is more than 0.7, the information of the third layer can be visually recognized with the naked eye during observation of the identification medium from the third layer side, and the information of the third layer cannot be visually recognized during observation of the inverted identification medium from the second layer side. Therefore, this is effective for the determination of authenticity. The $Ssf_3/S_3$ value is preferably 0.75 or more, and more preferably 1.0 or more. When the $Ssf_3/S_3$ value is 1.0 or more, there is substantially no difference in determining whether visual identification is possible or impossible among observers, and objective determination can be performed. The upper limit value of the $Ssf_3/S_3$ value is not particularly limited, and may be preferably 5 or less, and more preferably 3 or less. When the $Ssf_3/S_3$ value falls within such a range, the information of the third layer can be favorably visually recognized.

The wavelength of the reflected light from the first layer and the wavelength of the reflected light from the third layer are each usually in a visible light region, and there may or may not be a difference $\Delta E^*$ between the hue of the reflected light from the first layer and the hue of the reflected light from the third layer. When there is a difference $\Delta E^*$ between the hues, the value of the difference may be appropriately selected.

The wavelength of the reflected light from the second layer and the wavelength of the reflected light from the third layer are each in a visible light region. Although there may or may not be a difference $\Delta E^*$ between the hue of the reflected light from the first layer and the hue of the reflected light from the third layer, the former is more preferable. The difference $\Delta E^*$ between the hues is preferably 10 or more, more preferably 30 or more, and particularly preferably 50 or more. A difference $\Delta E^*$ equal to or more than the lower limit value is preferable since a difference in the color of reflection between the second layer and the third layer can be easily confirmed by visual inspection, replication and counterfeiting of the identification medium can be made more difficult, and design based on a clear difference in color can be imparted. The upper limit of $\Delta E^*$ may be set to, for example, 140.

The difference $\Delta E^*$ between the hues can be quantitatively evaluated with a color difference meter. As a color system for quantitative evaluation, any optional system may be used. For example, an XYZ color system, an L*a*b* color system, or the like may be used.

The identification medium according to the present embodiment is preferably transparent or translucent. The transparency of the identification medium may be the same as the transparency of the identification medium according to Embodiment 1.

[3. Other embodiments]

In the above-mentioned embodiments, as the method for forming the second layer and the third layer, a method for printing a predetermined pattern (for example, a character pattern) with an ink containing flakes of a cholesteric resin is described. However, the method for forming the second layer and the third layer is not limited to this method. The second layer and the third layer may also be formed by a method for printing a pattern with an ink containing flakes, or a method of forming a layered shape from a dispersion containing flakes by, for example, a molding method such as an extrusion-molding method or a solvent casting method.

[Article]

An article according to one embodiment of the present invention includes the above-mentioned identification medium and an adherend to which the identification medium is bonded.

According to the present embodiment, since the article includes the above-mentioned identification medium, the authenticity of the article can be identified without using a special viewer. Since the identification medium capable of preventing the reuse is included, fraud in which an adherend-identification medium having authenticity is peeled, and the identification medium is bonded to a counterfeit adherend can be suppressed, and the reliability of the article itself can

thereby be enhanced.

The adherend preferably has transparency as the properties of a material, and is more preferably glass having transparency. This is because the front and back surfaces of the identification medium can be observed through the article, and the authenticity can be suitably determined using the identification medium according to the present embodiment.

The visible light transmittance of the glass having transparency is, for example, 70% or more, preferably 80% or more, and more preferably 85% or more. The haze level of the glass having transparency is, for example, 1,0% or less, preferably 0.5% or less, and ideally 0%.

The form of the adherend is not particularly limited, and typical examples thereof may include a perfume bottle, an alcohol bottle, and a tableware.

[Examples]

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The operation described below was performed under the conditions of normal temperature and normal pressure (23°C±2°C, 1 atmospheric pressure) in the atmospheric air, unless otherwise specified.

[Evaluation methods]

[Measurement of volume-average particle diameter of flakes]

The coating material containing flakes was used as a sample. The volume-average particle diameter (D50) of the flakes was measured with a laser diffraction/scattering particle size distribution analyzer "LA-960V series" manufactured by Horiba, Ltd., based on a laser scattering and diffraction method. A particle diameter at a point where the cumulative frequency calculated from a small-diameter side in the obtained particle size distribution (by volume) reached 50% was calculated.

[Calculation of area ratio of area of bottom surface relative to area of side surface of flakes]

The flakes were assumed to have a disk form, and the above-mentioned volume-average particle diameter (D50) of the flakes was assumed to be the diameter r of the bottom surface area of the disk. With these assumptions, the area of a bottom surface ($\pi(r/2)^2$) was calculated. The thickness (5.2 μm) of a cholesteric resin layer was assumed to be the thickness (height) L of the disk, and the area of a side surface ($\pi rL$) was calculated. From the obtained values, the area ratio of the area of one bottom surface relative to the area of the side surface of the flakes was calculated.

[Ratio of area of flake group per unit area of second layer]

The second layer (print layer) of the identification medium was observed with a digital microscope ("VHX-7000" manufactured by Keyence Corporation, followed by image analysis with the digital microscope. From the analysis results, the areas of the plurality of flakes existing per unit volume (1 $mm^2$) were measured, and the total value of the areas was determined. From the total value, the ratio of the area of the flake group per unit area of the second layer was calculated.

[Measurement of adhesion force and tension]

Using a norbornene-based resin layer (ZNR film) as a first layer, the second layer (print layer containing flakes), an adhesion-facilitated PET film, and a tackiness layer (A) in Examples, an evaluation sample film was prepared. From the evaluation sample film, a film piece was prepared, and bonded to a float glass plate, and adhesion forces between the respective layers were measured by performing a 90° peel test. In the bonding the film piece to the float glass plate, a pressure was applied by pressing the film piece side by one reciprocation of a 2-kg roller at a speed of 300 mm/min, and the film piece and the float glass plate were then allowed to stand for 20 minutes. The adhesion force and the tension were measured in an environment of a temperature 22°C and a humidity of 50%.

FIG. 13 is a cross-sectional view schematically illustrating the method for measuring an adhesion force F1 between the first layer and the second layer in Examples. FIG. 14 is a cross-sectional view schematically illustrating the method for measuring an adhesion force F2 between the second layer and the tackiness layer in Examples. FIG. 15 is a cross-sectional view schematically illustrating the method for measuring an adhesion force F3 between the tackiness layer and an adherend in Examples. FIG. 16 is a cross-sectional view schematically illustrating the method for measuring an

adhesion force F4 between the first layer and the tackiness layer in Examples.

(1. Measurement of adhesion force F1 between first layer and second layer)

On one surface of the ZNR film, a print layer was produced using a coating material containing flakes in Examples by a screen printing method. As a plate for screen printing, an 80-mesh plate for whole surface printing was used. In the production of the print layer, a space having a width of about 10 mm from one end of the ZNR film was formed, and the print layer was produced at an area except the space portion. Subsequently, the tackiness layer (A) having a release layer on both surfaces was prepared, the release layer on one surface was peeled, and the tackiness layer (A) was bonded to the print layer, to produce a sample film.

The obtained sample film was cut to obtain a film piece of 10 mm width having the ZNR film (norbornene-based resin) 311b and the print film (second layer) 312, as shown in FIG. 13. At that time, the sample film was cut in a direction parallel to the width direction of the space portion so that the space portion remained at one end of the film piece. The release layer (not shown) of this film piece was peeled, and the tackiness layer 314 of the film piece was bonded to the float glass plate 220.

Subsequently, the space portion of the ZNR film 311b of the film piece was pinched by a tip of a force gauge 210, the ZNR film 311b was pulled in a line direction of a surface of the float glass plate 220 at a speed of 300 mm/min, and the strength of a traction force when the ZNR film 311b was peeled from the print layer 312 was measured as an adhesion force F1. The adhesion force F1 was 1.5 N/10 mm.

(2. Measurement of adhesion force F2 between second layer and tackiness layer (A))

On one surface of the adhesion-facilitated PET film ("PET film A4100" manufactured by ToYoBo Co., Ltd., hereinafter referred to as "PET film"), the print layer was produced using the coating material containing flakes in Examples by a screen printing method. As a plate for screen printing, an 80-mesh plate for whole surface printing was used. In the production of the print layer, the print layer was produced on the entire area of one surface of the PET film. Subsequently, the tackiness layer (A) having a release layer was prepared, a space portion having a width of about 10 mm from one end of the print layer was produced, and the tackiness layer (A) was bonded to the print layer, to produce a sample film.

The obtained sample film was cut to obtain a film piece of 10 mm width having the PET film 320, the print layer 312, and the tackiness layer (A)314, as shown in FIG. 14. At that time, the sample film was cut in a direction parallel to the width direction of the space portion so that the space portion remained at one end of the film piece. The release layer (not shown) of this film piece was peeled, and the tackiness layer 314 of the film piece was bonded to the float glass plate 220.

Subsequently, the space portion of a layered portion of the PET film 320 and the print layer 312 of the film piece was pinched by a tip of the force gauge 210, the layered portion was pulled in a line direction of a surface of the float glass plate 220 at a speed of 300 mm/min, and the strength of a traction force when the print layer 312 was peeled from the tackiness layer 314 was measured as an adhesion force F2. The adhesion force F2 was 5.8 N/10 mm.

(3. Measurement of adhesion force F3 between tackiness layer (A) and adherend)

The tackiness layer (A) was bonded to one surface of the adhesion-facilitated PET film, to produce a sample film.

The obtained sample film was cut to obtain a film piece of 10 mm width having the PET film 320 and the tackiness layer (A) 314, as shown in FIG. 15. The release layer (not shown) of this film piece was peeled, and the tackiness layer 314 of the film piece was bonded to the float glass plate 220. At that time, a space portion that had a width of about 10 mm from one end of a short edge of the film piece, and was not bonded to the float glass plate was formed.

The space portion of a layered portion of the PET film 320 and the tackiness layer 314 of the film piece was pinched by a tip of the force gauge 210, the layered portion was pulled in a line direction of a surface of the float glass plate 220 at a speed of 300 mm/min, and the strength of a traction force when the tackiness layer (A) 314 was peeled from the float glass plate 220 was measured as an adhesion force F3. The adhesion force F3 was 7.8 N/10 mm.

(4. Measurement of adhesion force F4 between first layer and tackiness layer (A))

The tackiness layer (A) was bonded to one surface of the ZNR film, to produce a sample film. At that time, a space portion that had a width of about 10 mm from one end of the ZNR film and was not bonded to the tackiness layer (A) was formed.

The obtained sample film was cut to obtain a film piece having a width of 10 mm. At that time, the sample film was cut in a direction parallel to the width direction of the space portion so that the space portion remained at one end of the film piece. Thus, a film piece having the ZNR film 311b and the tackiness layer 314 was obtained, as shown in FIG. 16. The release layer (not shown) of this film piece was peeled, and the tackiness layer 314 of the film piece was bonded to the float

glass plate 220.

Subsequently, the space portion of the ZNR film 311b of the film piece was pinched by a tip of a force gauge 210, the ZNR film 311b was pulled in a line direction of a surface of the float glass plate 220 at a speed of 300 mm/min, and the strength of a traction force when the ZNR film 311b was peeled from the tackiness layer 314 was measured as an adhesion force F4. The adhesion force F4 was 2.3 N/10 mm.

(5. Measurement of tension T1 for deformation of tackiness layer (A))

FIG. 17 is a cross-sectional view schematically illustrating a method for measuring a tension T1 for deforming the tackiness layer in Examples.

The tackiness layer (A) having a release layer on both surfaces was cut to obtain a tackiness layer piece having a width of 10 mm. As shown in FIG. 17, the release layers (not shown) on both surfaces of this tackiness layer piece 314 were peeled, and the tackiness layer piece 314 was bonded to a float glass plate. At that time, a space portion that had a width of about 10 mm from one end of a short edge of the tackiness layer piece 314 and was not to be bonded to the float glass plate 220 was formed.

Subsequently, the space portion of the tackiness layer piece 314 was pinched by a tip of a force gauge 210, the tackiness layer piece was pulled in a line direction of a surface of the float glass plate 220 at a speed of 300 mm/min, and the strength of a traction force when the space portion of the tackiness layer piece 314 begun to be stretched was measured as a tension T1. The tension T1 was 3.3 N/10 mm.

The evaluation results are shown in Table 1.

Table 1

| | 90° peel test results (N/10mm) |
|---|---|
| Adhesion force F1 | 1.5 |
| Adhesion force F2 | 5.8 |
| Adhesion force F3 | 7.8 |
| Adhesion force F4 | 2.3 |
| Tension T1 | 3.3 |

[Description of reagents and materials for layers constituting identification medium]

Reagents and materials for layers constituting an identification medium used in Examples are as follows.

As the photopolymerizable liquid crystal compound, a compound (X1) having the following structure was used.

[Chemical formula 5]

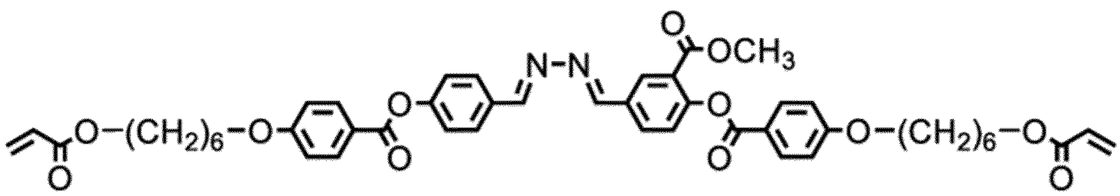

(X1)

As the photopolymerizable non-liquid crystal compound, a compound (X2) having the following structure was used.

[Chemical formula 6]

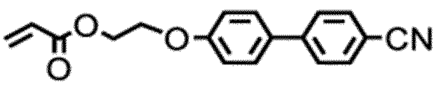

(X2)

As the chiral agent, "LC756" manufactured by BASF was used.
As the photopolymerization initiator, "Irgacure OXEO2" manufactured by Ciba Japan KK was used.
As the surfactant, "Ftergent 209F" manufactured by NEOS Co., Ltd., was used.

[Examples]

[1. Production of cholesteric resin layer]

A cholesteric resin layer used in production of identification mediums in Examples and Comparative Examples was produced using a photocurable liquid crystal composition prepared by a method described below. The cholesteric resin layer was used as a first layer in some cases, and was pulverized into flakes and used as a pigment of a coating material for forming a second layer in some other cases.

(Preparation of photocurable liquid crystal composition)

A photocurable liquid crystal composition was prepared by mixing 21.9 parts of the photopolymerizable liquid crystal compound, 5.47 parts of the photopolymerizable non-liquid crystal compound, 1.69 parts of the chiral agent, 0.9 part of the photopolymerizable initiator, 0.03 part of the surfactant, and 70 parts of cyclopentanone.

(Production of multilayer film including cholesteric resin layer)

As a supporting body, a long-length polyethylene terephthalate film being isotropic in terms of in-plane refractive index ("PET film A4100" manufactured by Toyobo Co., Ltd.; thickness: 100 μm, hereinafter referred to as a "PET film") was prepared. This PET film was set in a feeder of a film conveying device, and the following operation was performed while the PET film was conveyed in a long-length direction. First, a rubbing treatment was performed in the long-length direction parallel to the conveying direction. Subsequently, the prepared liquid crystal composition was applied onto the rubbing-treated surface using a die coater. As a result, an uncured film of the liquid crystal composition was formed on one surface of the PET film. The uncured film of the liquid crystal composition was subjected to an orientation treatment at 120°C for 4 minutes.
The film after the orientation treatment was subjected to a first ultraviolet irradiation treatment (illuminance: 5 $mJ/cm^2$, 1 minute), a first heating treatment (100°C, 1 minute), a second ultraviolet irradiation treatment (illuminance: 30 $mJ/cm^2$, 1 minute), and a second heating treatment (100°C, 1 minute), and the film of the liquid crystal composition was then irradiated with ultraviolet light of 800 $mJ/cm^2$ in a nitrogen atmosphere, to completely cure the film of the liquid crystal composition. As a result, a multilayer film including a cholesteric resin layer with a thickness of 5.2 μm on one surface of the long-length PET film was obtained.

[2. Production of coating material using flakes]

Using the multilayer film including the cholesteric resin layer produced by the above-mentioned procedure, a peel piece of the cholesteric resin layer was produced. As an apparatus for producing the peel piece, an apparatus shown in FIG. 18 was used. FIG. 18 is a side view schematically illustrating the apparatus for producing the peel piece of the cholesteric resin layer.
As shown in FIG. 18, a production apparatus 400 including a film feeder 420, a peel unit 430, and a film collecting unit 440 was prepared. The peel unit 430 included a bar 434 having a corner portion 435 formed at an acute angle and a nozzle 436 disposed immediately downstream of the corner portion 435 and capable of spraying air. The angle of the corner portion 435 of the bar 434 was set so that a multilayer film 410 was folded at an angle θ (45°). The corner portion had a chamfered structure with R of 0.2 mm to 0.3 mm.
The multilayer film 410 was set in the film feeder 420 in such a direction that the multilayer film 410 was folded at the corner portion 435 of the bar 434 in a manner wherein the cholesteric resin layer 411 faced outward rather than the PET film 412. The multilayer film 410 was fed from the film feeder 420 with a tension in the conveying direction being applied to the multilayer film 410 by the film collecting unit 440. At that time, the magnitude of the tension applied to the multilayer film 410 was set to 80 N/m. Air was sprayed from the nozzle 436 at a pressure of 0.5 MPa.
The multilayer film 410 was folded at the corner portion 435 of the bar 434, and many cracks were generated. After that, the cholesteric resin layer 411 having the generated cracks was peeled and blown by air sprayed from the nozzle 436, to obtain peel pieces 411A. The obtained peel pieces 411A were collected by a collecting device.

(Production of flakes)

The collected peel pieces of the cholesteric resin layer were pulverized with a mill-stone-type pulverizer ("Micro powder MPW-G008" manufactured by West Corporation), to obtain flakes. The volume-average particle diameter (D50) of the obtained flakes was 78 μm, and the ratio of the area of a bottom surface relative to the area of a side surface of the flakes was 1.78.

(Production of coating material)

The obtained flakes were used as a pigment for a cholesteric resin layer. A coating material was obtained by mixing 10 parts of a screen ink ("S240-800" manufactured by Seiko Advance Ltd., refractive index: 1.49) as a binder solution (medium), 0.5 part of a dilution solvent ("T472" manufactured by Seiko Advance Ltd.), and 1 part of the aforementioned flakes.

[3. Production of identification medium]

The above-mentioned multilayer film including the cholesteric resin layer and the PET film, and, as a layer containing a norbornene-based polymer, a resin film ("ZF16-100" manufactured by ZEON Corporation; thickness: 100 μm, ZNR film) were prepared. Onto the cholesteric resin layer of the multilayer film, an UV curing adhesive ("UVX-6298" manufactured by Toagosei Co., Ltd.) was applied, and the ZNR film was bonded. The ultraviolet curing adhesive was cured by irradiation with ultraviolet light of 350 mJ/cm$^2$ from the ZNR film side. Subsequently, the PET film was peeled from the multilayer film. By the above-mentioned procedure, the layered body including the cholesteric resin layer, the UV curing adhesive layer (thickness: 2 μm), and the ZNR film was obtained.

Both surfaces of the layered body were screenprinted with the coating material containing the flakes. As a plate for screen printing, an 80-mesh screen with a character pattern was prepared. Subsequently, a layered body including the cholesteric resin layer and the print layers was heated on a hot plate at 80°C for 10 minutes, to dry the coating material, and as a result, an identification medium was obtained. The print layers (a second layer and a third layer) disposed on the front and back surfaces of the layered body had character patterns that were different from each other. Each of the print layers (the second layer and the third layer) had a ratio of area of a flake group relative to the unit area of the layer of 59.2%.

To the surface of the layered body including the print layers on the cholesteric resin layer side, a protective film with a tackiness layer ("protective film for tack title" manufactured by Kokuyo Co., Ltd.) was bonded. The tackiness layer (A) having release layers ("double-sided tackiness film OCA100" manufactured by ID Create Inc.) was prepared. The tackiness layer (A) having release layers was an acryl-based tackiness agent without a substrate, and had a configuration in which the release layer, the tackiness layer (A), and the release layer were layered in this order. One of the release layers of the tackiness layer (A) having release layers was peeled, and the tackiness layer (A) was bonded to a surface of the layered body including the print layer on the ZNR film side. By the above-mentioned procedure, an identification medium having the release layer was obtained.

[4. Bonding of identification medium to adherend and peeling of identification medium]

The release layer of the obtained identification medium was peeled, and the tackiness layer (A) was bonded to a float glass plate. When the bonded identification medium was observed, different character patterns were identified on each of the front and back surfaces of the identification medium. From one surface side of the identification medium, the see-through image of the print layer disposed on the other surface side was not confirmed.

Subsequently, the identification medium was peeled from the float glass plate. At an interface between the first layer and the second layer of the identification medium, separation occurred, and the second layer and the tackiness layer (A) remained on the float glass plate were confirmed. Subsequently, the tackiness layer (A) remained was tried to be peeled, but the tackiness layer (A) was stretched during peeling, and collapse of the shape of the character pattern of the second layer was confirmed.

Reference Sign List

10,100 identification medium
11,111 first layer
12,112 second layer
12f,112f,113f flake

14,114,314 tackiness layer (A)
15,115 tackiness layer
16,116 protective layer
20,220 adherend
111a cholesteric resin layer
111b norbornene-based resin layer
111c adhesive layer
113 third layer
210 force gauge
311b norbornene-based resin layer (ZNR film)
312 second layer (print layer)
320 PET film
400 apparatus for producing peel piece of a cholesteric resin layer
410 multilayer film
411 cholesteric resin layer
412 supporting body (PET film)
411A peel piece
420 film feeder
430 peel unit
434 bar
435 corner portion of bar
436 nozzle
440 film collecting unit

## Claims

**1.** An identification medium comprising: a first layer; a second layer disposed thereon in a manner of overlapping with the first layer; and a tackiness layer disposed on the second layer, wherein:

the first layer is a layer capable of reflecting one of clockwise circularly polarized light and counterclockwise circularly polarized light and of allowing transmission of the other circularly polarized light, and includes a layer of a resin having cholesteric regularity;
the second layer is a layer capable of reflecting at least a portion of circularly polarized light rotating in a same direction as a rotation direction of the circularly polarized light that is reflected by the first layer and allowing transmission of the circularly polarized light rotating in a direction opposite to the rotation direction of the circularly polarized light that is reflected by the first layer, and is a layer containing flakes of a resin having cholesteric regularity; and
when the tackiness layer is bonded to an adherend, an adhesion force F1 between the first layer and the second layer, an adhesion force F2 between the second layer and the tackiness layer, and an adhesion force F3 between the tackiness layer and the adherend satisfy relationships of the following formulae (1) and (2):

$$F1 < F2 \quad (1),$$

and

$$F1 < F3 \quad (2).$$

**2.** The identification medium according to claim 1, wherein a tension T1 that deforms the tackiness layer and the adhesion force F3 between the tackiness layer and the adherend satisfy a relationship of the following formula (3) :

$$T1 < F3 \quad (3).$$

**3.** The identification medium according to claim 1, wherein:

the second layer is a layer disposed on a part of a surface of the first layer;
the tackiness layer is a layer disposed on the first layer and on the second layer; and

when the tackiness layer is bonded to an adherend, the adhesion force F3 between the tackiness layer and the adherend and an adhesion force F4 between the first layer and the tackiness layer satisfy a relationship of the following formula (4):

$$F4 < F3 \quad (4).$$

**4.** The identification medium according to claim 1, comprising a third layer disposed on a surface of the first layer opposite to a surface on which the second layer is disposed in a manner of overlapping with the first layer, wherein
the third layer is a layer capable of allowing transmission of circularly polarized light rotating in a direction opposite to the rotation direction of the circularly polarized light that is reflected by the first layer, and is a layer containing flakes of a resin having cholesteric regularity.

**5.** The identification medium according to claim 1, wherein a volume-average particle diameter (D50) of the flakes of the resin having cholesteric regularity is 70 μm or more.

**6.** The identification medium according to claim 1, wherein the first layer is a layered body of the layer of the resin having cholesteric regularity and a layer containing a norbornene-based resin.

**7.** The identification medium according to claim 1, wherein the adherend is transparent glass.

**8.** The identification medium according to claim 1, wherein the identification medium is separable between the first layer and a layered portion of the second layer and the tackiness layer when the identification medium is bonded to the adherend and then peeled therefrom.

**9.** The identification medium according to claim 8, wherein the tackiness layer is deformed and the second layer is broken when the tackiness layer in the layered portion having been separated from the identification medium is peeled from the adherend.

**10.** An article comprising: the identification medium according to any one of claims 1 to 9; and an adherend to which the identification medium is bonded.

FIG.1

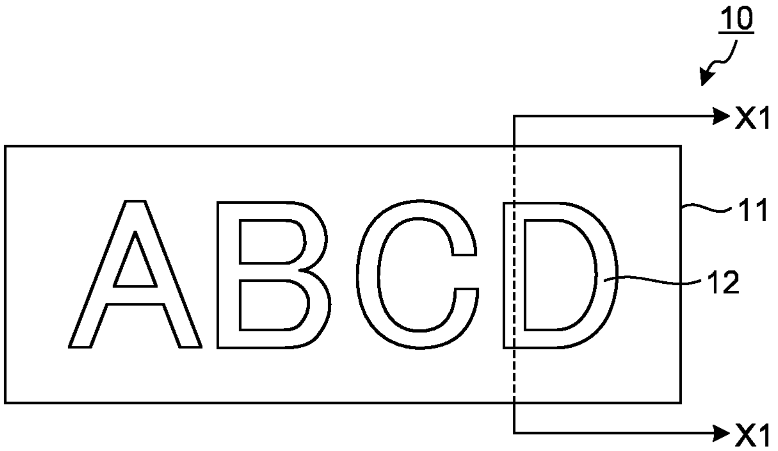


FIG.2

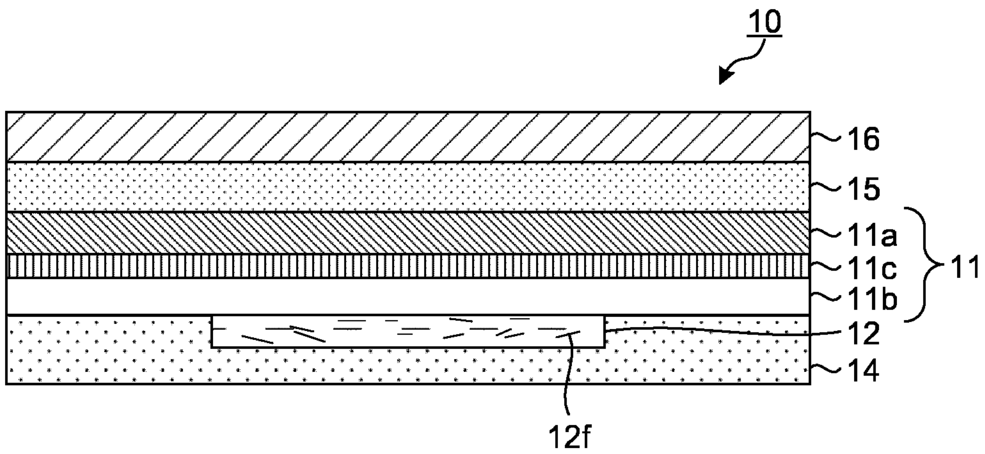

FIG.3

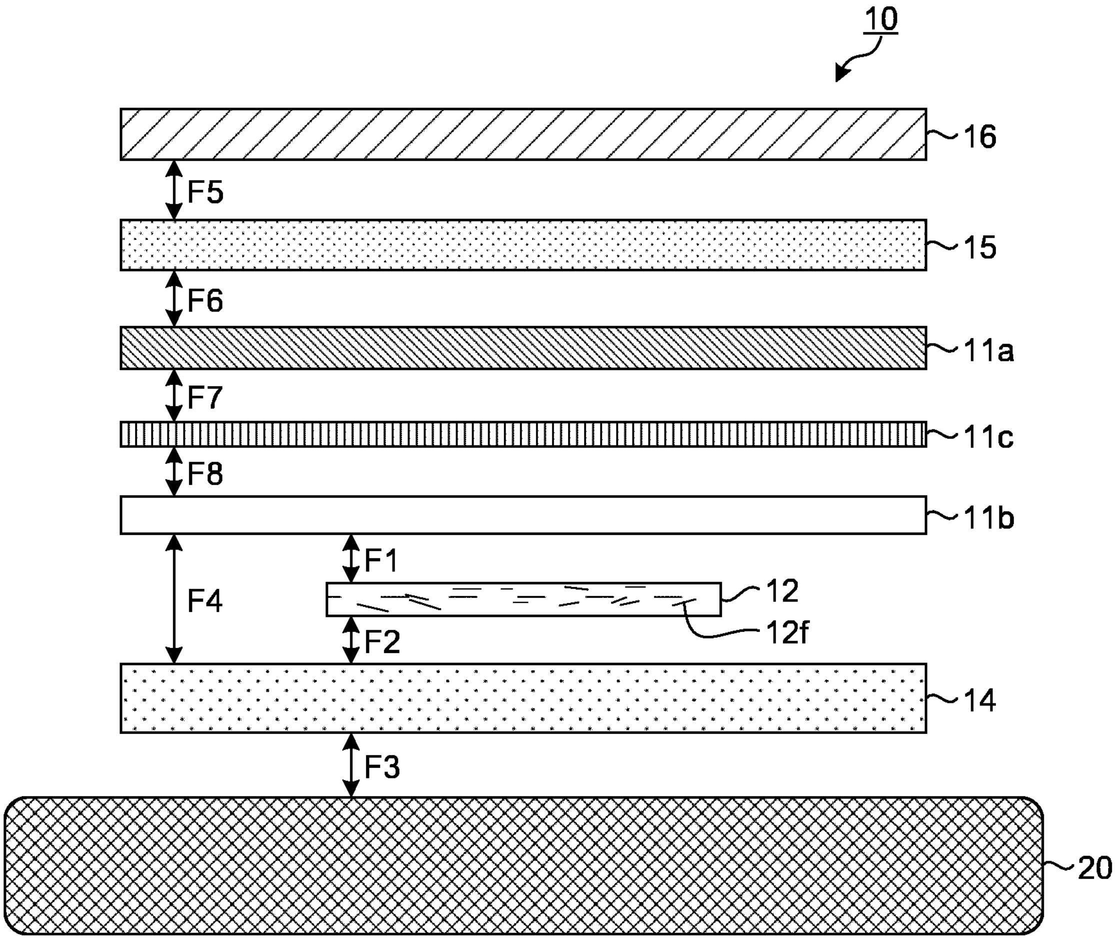
10
16
F5
15
F6
11a
F7
11c
F8
11b
F1
F4
12
12f
F2
14
F3
20

FIG.4

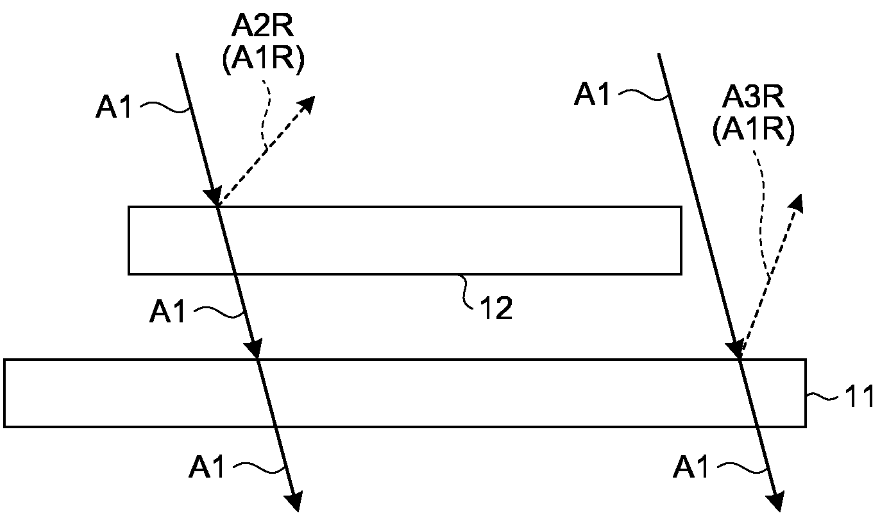
A2R
(A1R)
A1
A1
A3R
(A1R)
12
A1
11
A1
A1

FIG.5

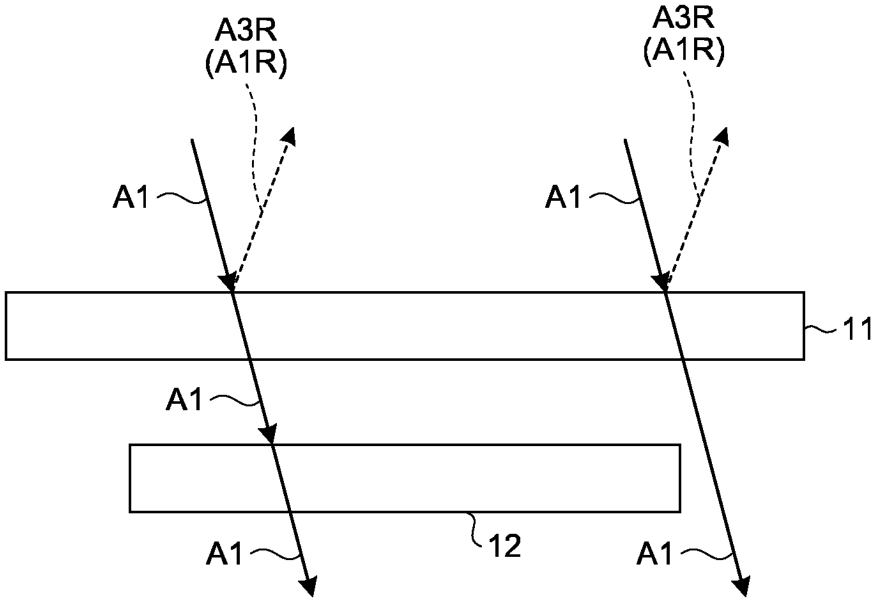


FIG.6

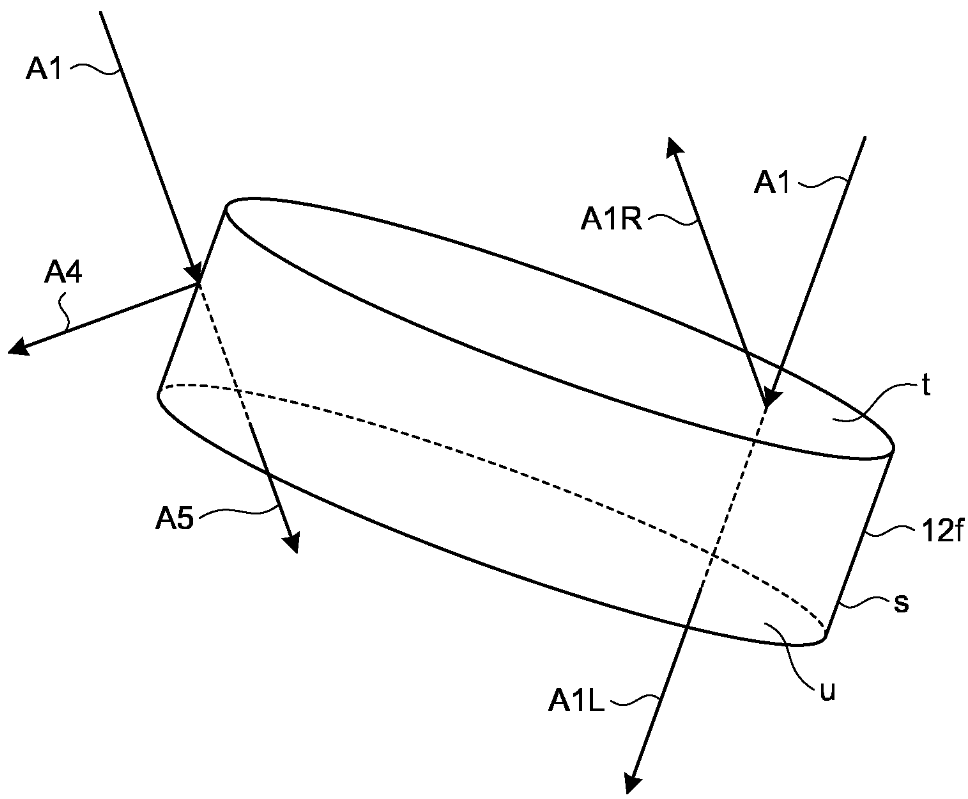

FIG.7

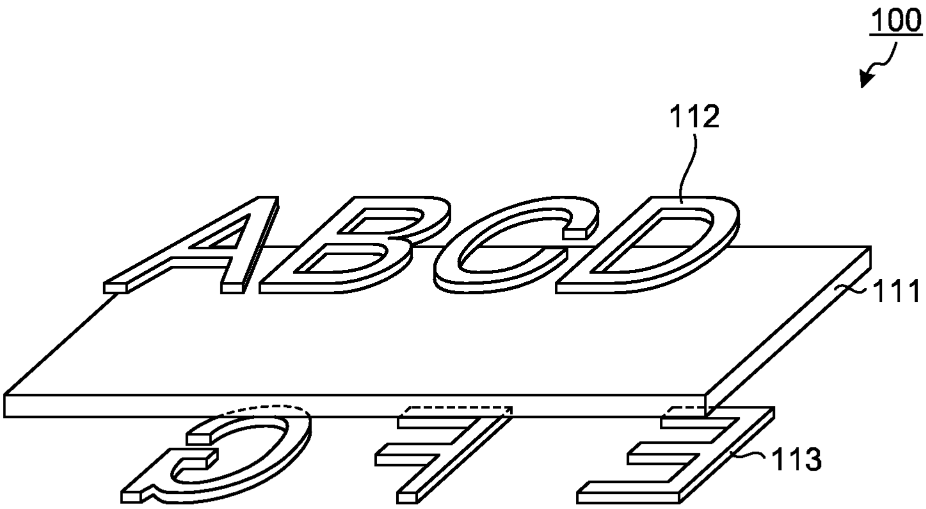


FIG.8

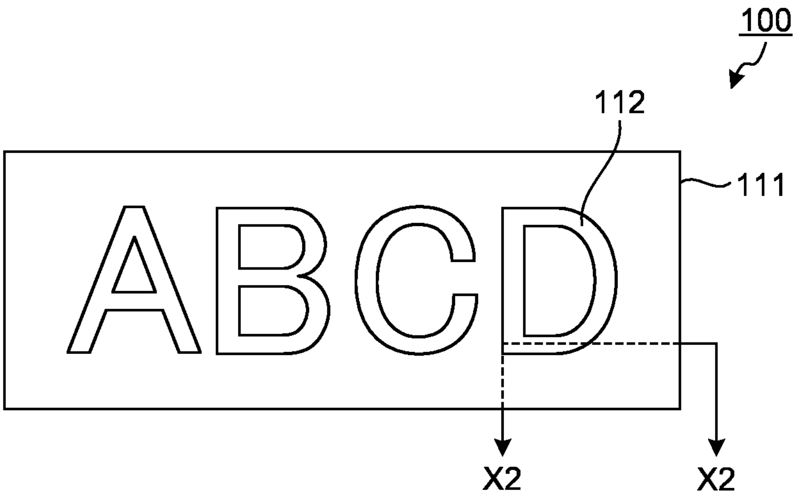

FIG.9

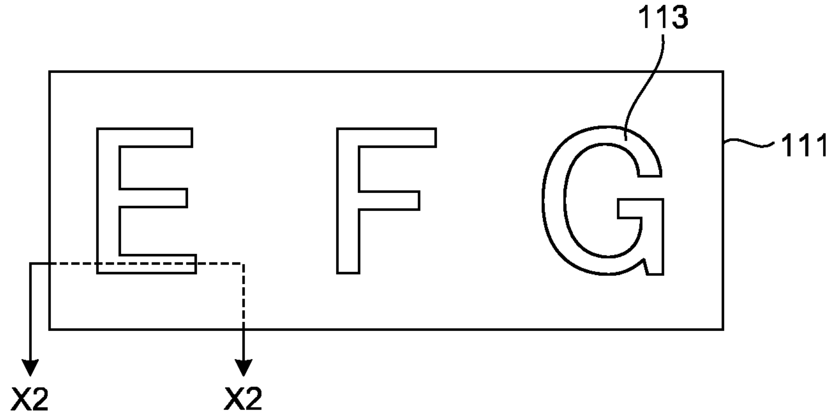


FIG.10

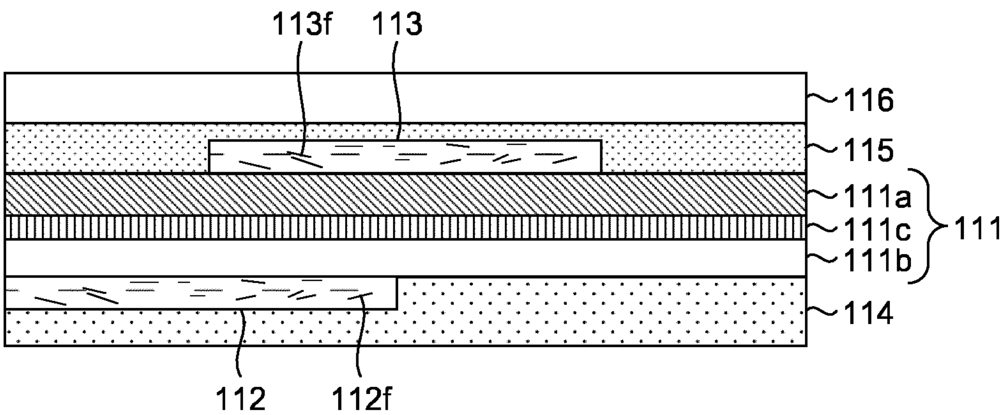

FIG.11

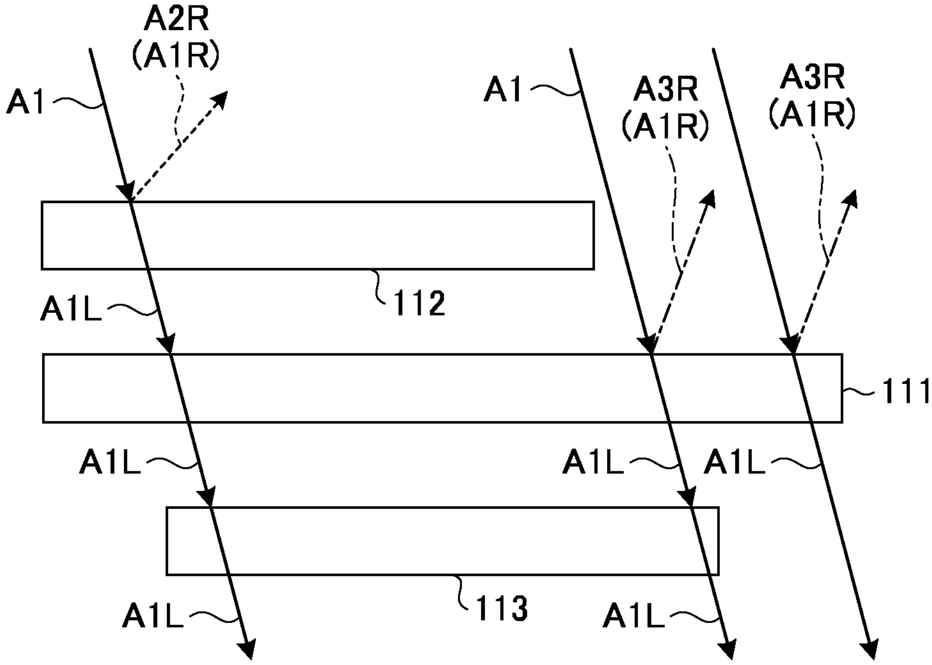
A2R
(A1R)
A1
A1
A3R
(A1R)
A3R
(A1R)
112
A1L
111
A1L
A1L
A1L
113
A1L
A1L

FIG.12

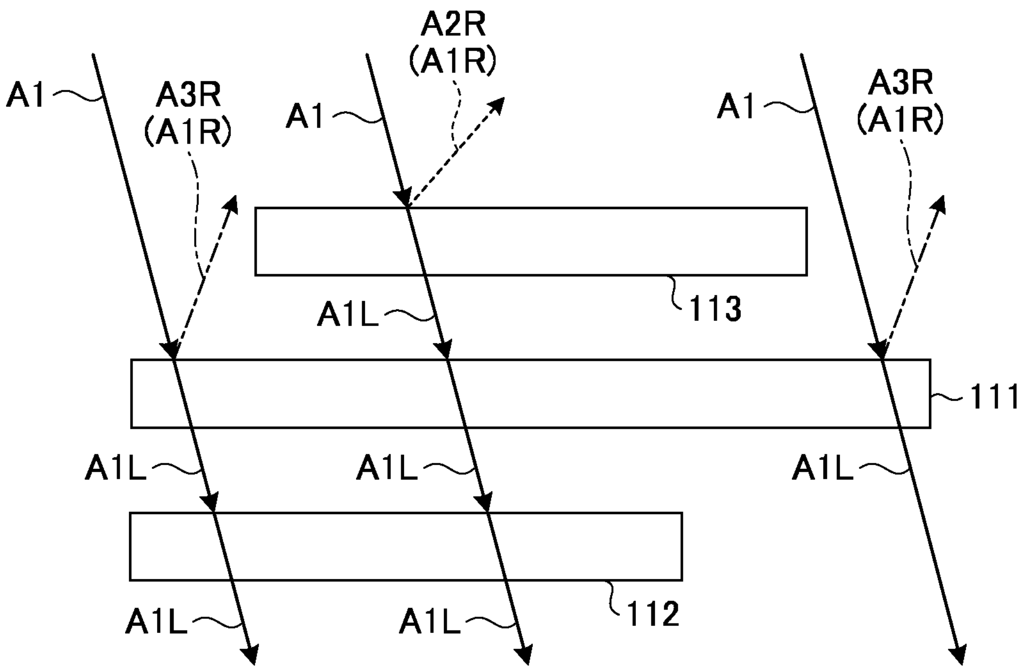
A2R
(A1R)
A1
A3R
(A1R)
A1
A1
A3R
(A1R)
113
A1L
111
A1L
A1L
A1L
112
A1L
A1L

FIG.13

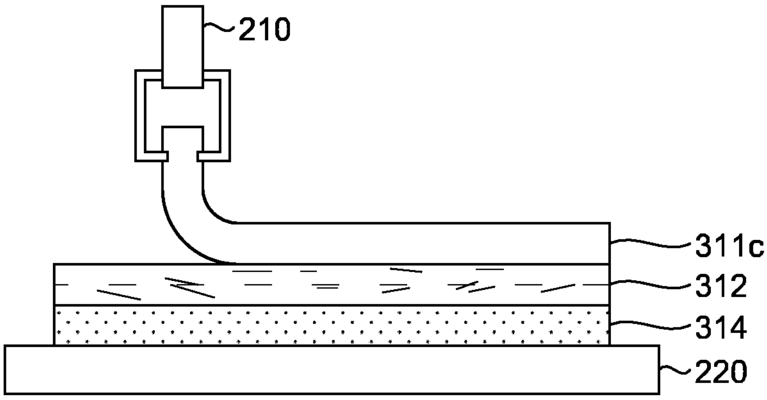


FIG.14

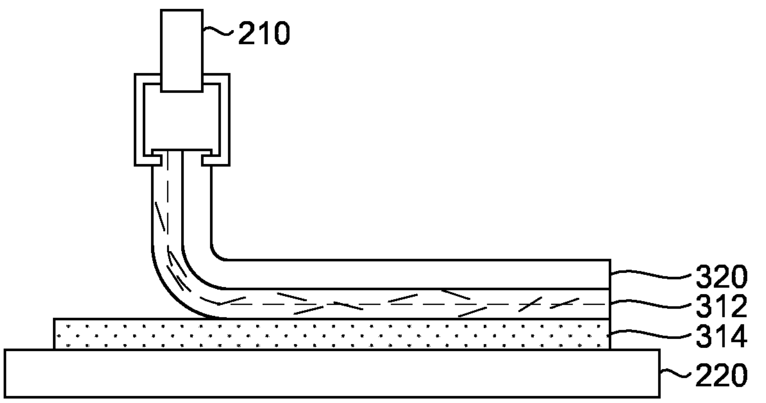

FIG.15

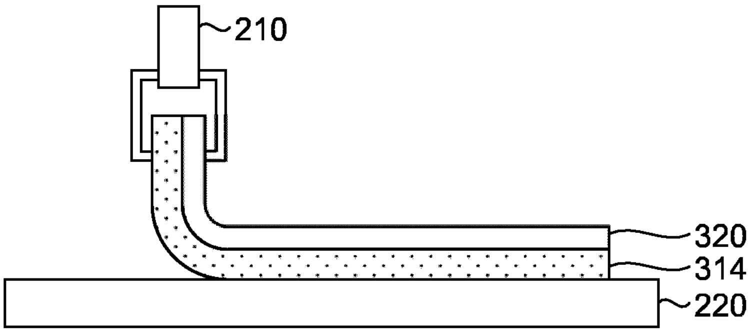


FIG.16

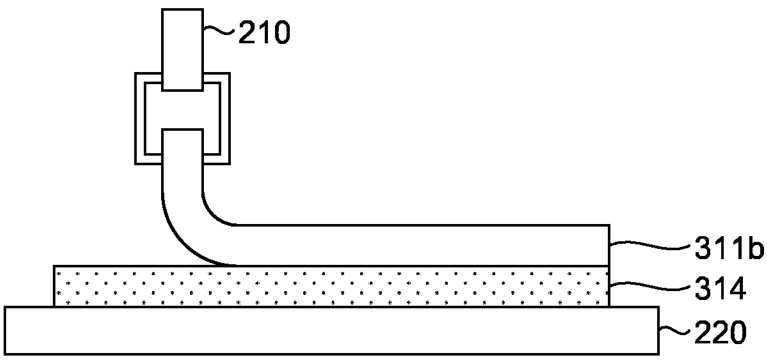

FIG.17

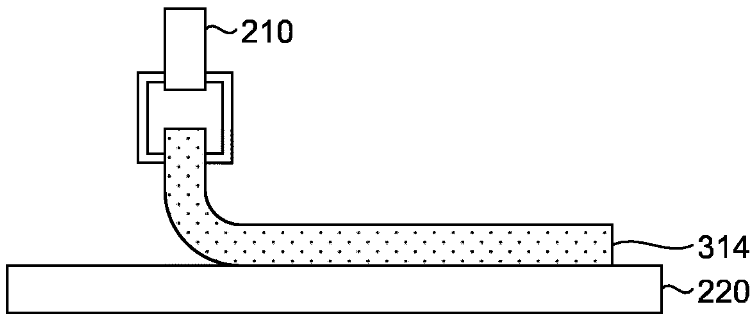


FIG.18

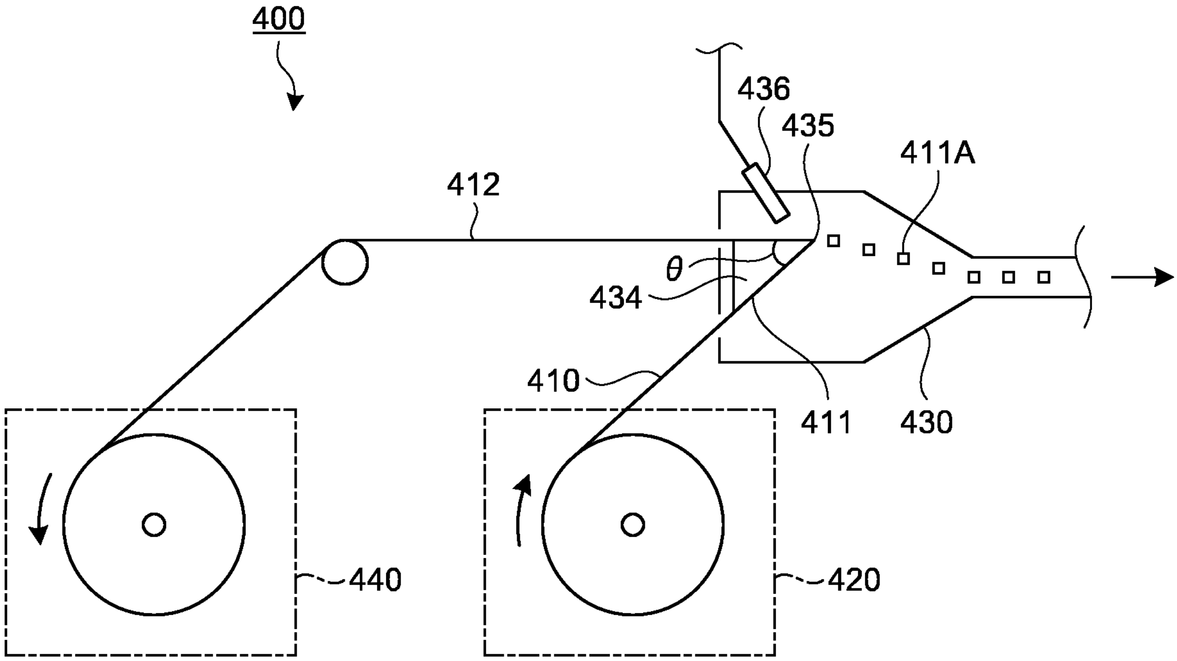

**INTERNATIONAL SEARCH REPORT**

International application No.
**PCT/JP2023/011303**

**A. CLASSIFICATION OF SUBJECT MATTER**

***G02B 5/30***(2006.01)i; ***B32B 7/023***(2019.01)i; ***B42D 25/22***(2014.01)i; ***B42D 25/364***(2014.01)i
FI: G02B5/30; B42D25/22; B32B7/023; B42D25/364

According to International Patent Classification (IPC) or to both national classification and IPC

**B. FIELDS SEARCHED**

Minimum documentation searched (classification system followed by classification symbols)

G02B5/30; B32B7/023; B42D25/22; B42D25/364

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/004155 A1 (ZEON CORP.) 02 January 2020 (2020-01-02) paragraphs [0118], [0120], example 1 | 1-10 |
| Y | WO 2021/065484 A1 (ZEON CORP.) 08 April 2021 (2021-04-08) example 1 | 1-10 |
| Y | WO 2021/241226 A1 (ZEON CORP.) 02 December 2021 (2021-12-02) example 1, fig. 1, 2 | 1-10 |
| Y | JP 2014-074835 A (NHK SPRING CO., LTD.) 24 April 2014 (2014-04-24) paragraphs [0033]-[0036] | 1-10 |
| Y | JP 2002-351330 A (DAINIPPON PRINTING CO., LTD.) 06 December 2002 (2002-12-06) paragraphs [0030], [0065], [0070] | 1-10 |
| Y | JP 2002-192634 A (FUJI SEAL INC.) 10 July 2002 (2002-07-10) paragraphs [0002]-[0004] | 1-10 |
| A | WO 2021/153761 A1 (ZEON CORP.) 05 August 2021 (2021-08-05) example 3 | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/011303**

**C. DOCUMENTS CONSIDERED TO BE RELEVANT**

| Category* | Citation of document, with indication, where appropriate, of the relevant passages | Relevant to claim No. |
|---|---|---|
| A | JP 2018-072388 A (TOPPAN PRINTING CO., LTD.) 10 May 2018 (2018-05-10) entire text | 1-10 |

Form PCT/ISA/210 (second sheet) (January 2015)

**INTERNATIONAL SEARCH REPORT**
**Information on patent family members**

International application No.
**PCT/JP2023/011303**

| Patent document cited in search report | Publication date (day/month/year) | Patent family member(s) | Publication date (day/month/year) |
|---|---|---|---|
| WO 2020/004155 A1 | 02 January 2020 | US 2021/0300105 A1<br>paragraphs [0177], [0180], example 1<br>EP 3816683 A1<br>CN 112368613 A<br>TW 202001226 A | |
| WO 2021/065484 A1 | 08 April 2021 | US 2022/0357585 A1<br>example 1<br>EP 4040201 A1<br>CN 114402239 A | |
| WO 2021/241226 A1 | 02 December 2021 | (Family: none) | |
| JP 2014-074835 A | 24 April 2014 | US 2015/0323898 A1<br>paragraphs [0036]-[0039]<br>WO 2014/054696 A1<br>EP 2905767 A1<br>CN 104685552 A | |
| JP 2002-351330 A | 06 December 2002 | US 2002/0191233 A1<br>paragraphs [0036], [0084], [0091] | |
| JP 2002-192634 A | 10 July 2002 | (Family: none) | |
| WO 2021/153761 A1 | 05 August 2021 | EP 4099067 A1<br>example 3<br>CN 114981693 A | |
| JP 2018-072388 A | 10 May 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2020004155 A
- US 2021300105
- JP 6180095 B
- US 2015323898
- JP 2005289881 A
- JP 2004115414 A
- JP 2003066214 A
- JP 2003313187 A
- JP 2003342219 A
- JP 2000290315 A
- JP 6072962 A
- US 6468444 B
- WO 9800428 A
- JP 2007176870 A
- JP 2002321302 A
- JP 6142714 B